# EUROPÄISCHE PATENTSCHRIFT

(11) **EP 2 084 200 B1**
(45) Veröffentlichungstag und Bekanntmachung des Hinweises auf die Patenterteilung: **30.12.2009**
(21) Anmeldenummer: 07821782.5
(22) Anmeldetag: 24.10.2007
(51) Int. Cl.: C08G 18/10, C08G 18/12, C08G 59/40, C08L 63/00, C09J 175/04

(54) **DERIVATISIERTES EPOXID-FESTHARZ UND DESSEN VERWENDUNGEN**
DERIVATIZED SOLID EPOXY RESIN AND USES THEREOF
RÉSINE SOLIDE EN ÉPOXY DÉRIVÉE ET SES APPLICATIONS

(30) Priorität: 24.10.2006 EP 06122866
(43) Veröffentlichungstag der Anmeldung: 05.08.2009
(73) Patentinhaber: Sika Technology AG, 6340 Baar (CH)
(72) Erfinder: FINTER, Jürgen, 8037 Zürich (CH); KRAMER, Andreas, 8006 Zürich (CH)
(74) Vertreter: Dux, Roland
(86) Internationale Anmeldenummer: PCT/EP2007/061419
(87) Internationale Veröffentlichungsnummer: WO 2008/049860

(56) Entgegenhaltungen:
- WO-A-03/093387
- WO-A-2004/055092
- WO-A-2005/007720
- WO-A-2005/007766
- DATABASE WPI Week 197811 Derwent Publications Ltd., London, GB; AN 1978-20257A XP002419283 & JP 53 010652 A (ASAHI ELECTROCHEMICAL CO LTD) 31. Januar 1978 (1978-01-31)

## Beschreibung

### Technisches Gebiet

Die Erfindung betrifft das Gebiet der Epoxidharz- Zusammensetzungen, insbesondere das Gebiet der schlagzähen hitzehärtenden Epoxidharzzusammensetzungen und Strukturschäumen.

### Stand der Technik

Schlagzähigkeitsmodifikatoren werden schon seit langem dazu eingesetzt, um die Festigkeit von Duroplasten bei schlagartiger Krafteinwirkung zu verbessern. Insbesondere Epoxidharzzusammensetzungen weisen generell zwar hohe mechanische Festigkeiten auf, sind jedoch sehr spröde, das heisst, bei einer schlagartigen Krafteinwirkung, wie sie beispielsweise in einem Zusammenstoss von Fahrzeugen eintritt, bricht das gehärtete Epoxidharz und führt zu einer Zerstörung des Verbundes.

Flüssigkautschuke werden schon seit längerem zur Zähigkeitsmodifizierung eingesetzt. Beispielsweise werden Flüssigkautschuke auf Basis von Acrylnitril/Butadien-Copolymeren, wie sie beispielsweise unter dem Namen Hycar® erhältlich sind, eingesetzt.

EP-B-0 338 985 beschreibt schlagzähe Epoxidharzzusammensetzungen, welche neben Flüssigkautschuken auf Basis von Acrylnitril/Butadien-Copolymeren zusätzlich auch Flüssigkautschuke auf Basis von Polyurethanprepolymere aufweisen, welche mit einem Phenol oder einem Lactam terminiert sind. WO-A-2005/007766 offenbart schlagzähe Epoxidharzzusammensetzungen, welche ein Reaktionsprodukt eines Isocyanatgruppen-terminierten Prepolymers und eines Blockierungsmittels, welches ausgewählt ist aus der Gruppe Bisphenol, Phenol, Benzylalkohol, Aminophenol oder Benzylamin enthalten. WO-A-03/093387 offenbart schlagzähe Epoxidharzzusammensetzungen, welche Addukte von Dicarbonsäuren mit Glycidylethern oder von Bis(aminophenyl)sulfon-Isomeren oder aromatischen Alkoholen mit Glycidylethern enthalten. WO-A-2004/055092 und WO-A-2005/007720 offenbaren Epoxidharzzusammensetzungen mit verbesserter Schlagzähigkeit, welche ein Reaktionsprodukt eines Isocyanatgruppen-terminierten Polyurethanprepolymeren mit einem niedermolekularen Monohydroxyepoxid enthalten. Diese Epoxidharzzusammensetzungen weisen zwar gegenüber denjenigen, welche Phenol-terminierte Polyurethanprepolymere enthalten, eine verbesserte Tieftemperaturschtagzähigkeit auf, sind aber immer noch nicht optimal.

Bei allen diesen genannten Schlagzähigkeitsmodifikatoren handelt es sich um hochviskose Substanzen, was für die Herstellung einiger Formulierungen nachteilig ist. Speziell für die Zähigkeitsverbesserung von festen Epoxidsystemen, die meist durch Formulierung in Extrudern erfolgt, ist die Zugabe hochviskoser Flüssigkeiten nur mit erhöhtem Aufwand machbar.

### Darstellung der Erfindung

Aufgabe der vorliegenden Erfindung ist es daher, neue bei Raumtemperatur feste Schlagzähigkeitsmodifikatoren zu finden, welche einerseits als Epoxidharz fungieren können und andererseits die Schlagzähigkeit stark verbessern sowie einfach zu dosieren sind.

Überraschenderweise wurde gefunden, dass diese Aufgabe durch ein derivatisiertes Epoxid-Festharz gemäss Anspruch 1 gelöst werden kann.

Es lässt sich in einfacher Art und Weise aus kommerziellen Festharzen herstellen. Es wurde festgestellt, dass derartige ausgehärtete derivatisierte Epoxid-Festharze eine hohe Schlagzähigkeit aufweisen. Dies ist auch der Fall, wenn dieses derivatisierte Epoxid-Festharz auch anderen Harzen, insbesondere Epoxidharzen, zugegeben wird. Die derivatisierten Epoxid-Festharze erhöhen also die Schlagzähigkeit und können deshalb als Schlagzähigkeitsmodifikatoren eingesetzt werden.

Ein weiterer Aspekt der Erfindung betrifft Zusammensetzungen, welche derartige derivatisierte Epoxid-Festharze enthalten. Sie weisen ausserordentlich gute Mechanik und Schlagzähigkeit auf. Weiterhin lassen sich derartige Zusammensetzungen als einkomponentige hitzehärtende Klebstoffe oder als Strukturschäume verwenden.

Weitere Aspekte der Erfindung betreffen ein Verfahren zur Herstellung eines derart derivatisierten Epoxid-Festharzes und verklebte Artikel gemäss Anspruch 30 sowie geschäumte Artikel gemäss Anspruch 32. Besonders bevorzugte Ausführungsformen sind Gegenstand der Unteransprüche.

### Wege zur Ausführung der Erfindung

Die vorliegende Erfindung betrifft in einem ersten Aspekt ein derivatisiertes Epoxid-Festharz der Formel (I).

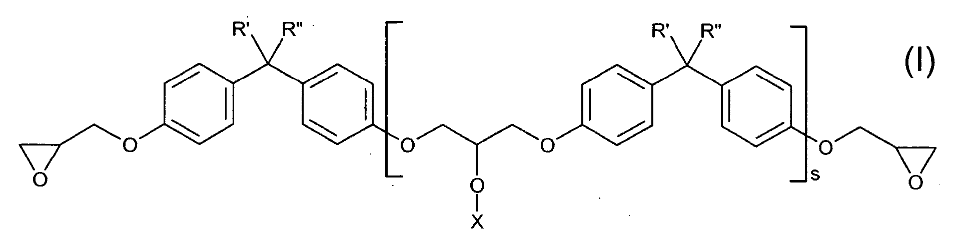

Hierbei stehen R' und R" unabhängig voneinander entweder für H oder CH₃. In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.

Weiterhin steht s für einen Wert von 2 bis 12.

Schliesslich steht X unabhängig voneinander für H oder einen Rest der Formel (II). 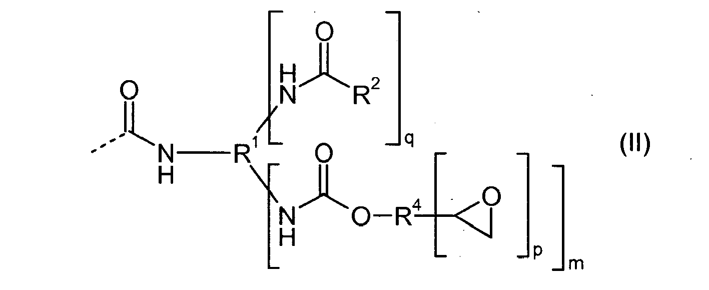 Hierbei steht R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen. Weiterhin ist p = 1, 2 oder 3 und R² steht unabhängig voneinander für eine Blockierungsgruppe, welche sich bei einer Temperatur über 100°C abspaltet. R¹ steht für ein mit (m+q+1) Isocyanatgruppen terminiertes lineares oder verzweigtes Polyurethanprepolymer **PU1** nach dem Entfernen aller endständigen Isocyanatgruppen und m ≥ 0 und q ≥ 0, mit der Bedingung, dass 1 ≤ (m+q) ≤ 8.

Schliesslich besteht die Massgabe, dass mindestens ein X in der Formel (I) für einen Rest der Formel (II) steht.

Die gestrichelten Linien in den Formeln dieses Dokumentes stellen jeweils die Bindung zwischen dem jeweiligen Substituenten und dem dazugehörigen Molekülrest dar.

Bevorzugt stehen alle R' und R" für Methyl.

Die derivatisierten Epoxid-Festharz der Formel (I) können aus der Reaktion eines Epoxid-Festharzes der Formel (I') und einem eine Isocyanatgruppe enthaltenden Polyurethanprepolymer der Formel (IV) erhalten werden.

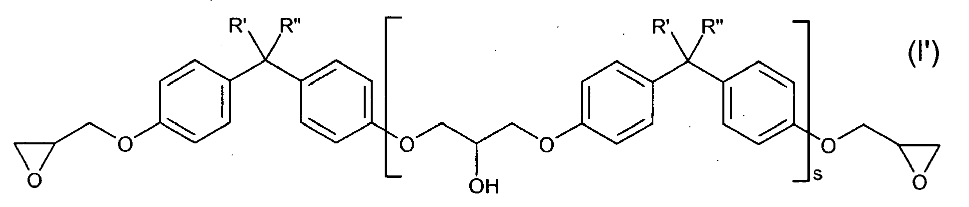

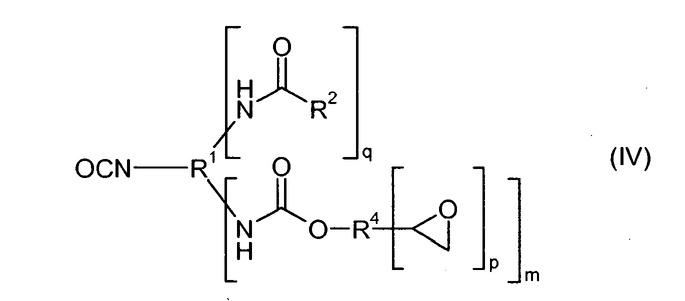

Diese Reaktion erfolgt typischerweise bei einer Temperatur, bei welcher sich das Epoxid-Festharz verflüssigen lässt, oder unter Verwendung von Lösungsmitteln, insbesondere in Gegenwart von Katalysatoren für die NCO/OH-Reaktion. Bevorzugt erfolgt die Reaktion bei einer Temperatur über dem Schmelzpunkt des Epoxidharzes der Formel (I'). Besonders bevorzugt wird die Reaktion unter Verwendung eines Compounders oder eines Extruders aus der Schmelze des Festharzes der Formel (I') und des eine Isocyanatgruppe enthaltenden Polyurethanprepolymers der Formel (IV) erhalten.

Als Katalysatoren für die Reaktion der Isocyanat-Gruppen mit den sekundären Hydroxylgruppen des Festharzes sind insbesondere die dem Fachmann bekannten Salze, Komplexe oder metallorganische Verbindungen von Übergangsmetallen, insbesondere von Zinn und Wismut geeignet. Insbesondere handelt es sich hierbei um Zinnverbindungen wie Dibutylzinndiacetat, Dibutylzinndilaurat, Dibutylzinndistearat, Dibutylzinndiacetylacetonat, Dioctylzinndilaurat, Dibutylzinndichlorid und Dibutylzinnoxid, Zinn(II)-carboxylate, Stannoxane wie Laurylstannoxan, Bismutverbindungen wie Bismut(III)-octoat, Bismut(III)-neodecanoat oder Bismut(III)-oxinate. Besonders geeignet ist Dibutylzinndilaurat.

Die Glastemperatur von Epoxid-Festharzen liegt über Raumtemperatur, d.h. sie lassen sich bei Raumtemperatur zu schüttfähigen Pulvern zerkleinern. Typische derartige Epoxid-Festharze sind kommerziell erhältlich beispielsweise von Dow oder Huntsman oder Hexion.

Durch Variation des Stöchiometrieverhältnisses lassen sich unterschiedlich viele der Hydroxylgruppen abreagieren. Durch den stöchiometrischen oder leicht überstöchiometrischen Einsatz des Isocyanates können alle OH-Gruppen abreagiert werden. Dies ist jedoch in den meisten Fällen nicht bevorzugt. Bevorzugt ist, dass nur ein Teil der OH-Gruppen abreagiert wird. Das heisst, dass es bevorzugt ist, dass in Formel (I) sowohl Reste X, welche für H stehen, als auch Reste X, welche für einen Rest der Formel (II) stehen, vorhanden sind.

Bevorzugt sind derivatisierte Epoxid-Festharze, in welchen maximal 90 %, insbesondere 10 - 80 %, bevorzugt 10-50 %, aller Reste X für einen Rest der Formel (II) stehen.

Bevorzugt steht in den Formeln (II) und (IV) R² für einen Rest, welcher ausgewählt ist aus der Gruppe bestehend aus 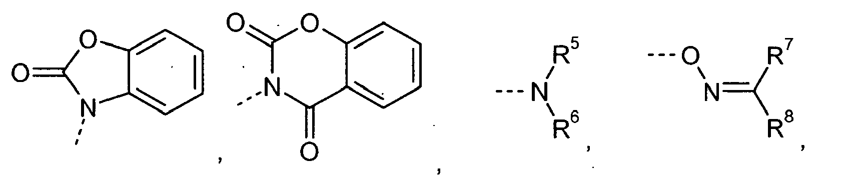 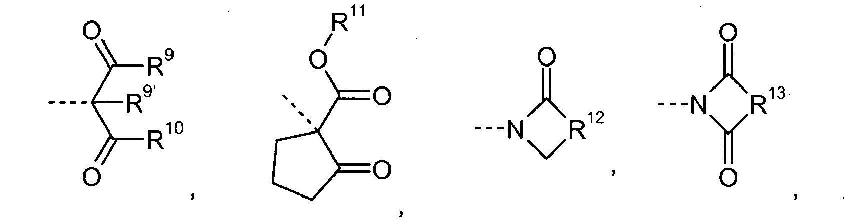 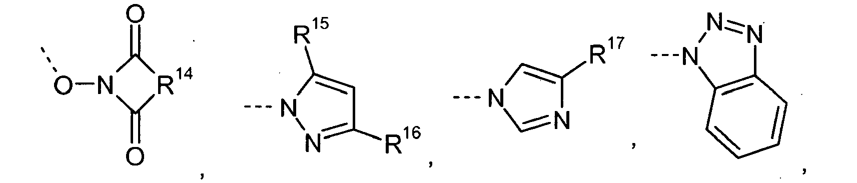 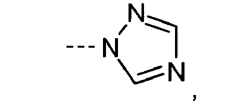 und ---O-R¹⁸

Hierbei stehen R⁵, R⁶, R⁷ und R⁸ je unabhängig voneinander für eine Alkyl- oder Cycloalkyl- oder Aralkyl- oder Arylalkyl-Gruppe oder aber R⁵ bildet zusammen mit R⁶, oder R⁷ zusammen mit R⁸, einen Teil eines 4- bis 7-gliedrigen Rings, welcher allenfalls substituiert ist.

Weiterhin steht R⁹, R⁹' und R¹⁰ je unabhängig voneinander für eine Alkyl- oder Aralkyl- oder Arylalkyl-Gruppe oder für eine Alkyloxy- oder Aryloxy-oder Aralkyloxy-Gruppe und R¹¹ für eine Alkylgruppe.

R¹², R¹³ und R¹⁴ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe und R¹⁵ , R¹⁶ und R¹⁷ stehen je unabhängig voneinander für H oder für eine Alkylgruppe oder für eine Arylgruppe oder eine Aralkylgruppe.

Schliesslich steht R¹⁸ für eine Aralkylgruppe oder für eine ein- oder mehrkernige substituierte oder unsubstituierte Aromatengruppe, welche gegebenenfalls aromatische Hydroxylgruppen aufweist.

Als R¹⁸ sind insbesondere einerseits Phenole oder Polyphenole, insbesondere Bisphenole, nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A.

Als R¹⁸ sind andererseits insbesondere Hydroxybenzylalkohol und Benzylalkohol nach Entfernung einer Hydroxylgruppe zu betrachten.

Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe.

Falls R⁵, R⁶, R⁷, R⁸, R⁹, R^{9'}, R¹⁰, R¹⁵, R¹⁶, R¹⁷ oder R¹⁸ für eine Aralkylgruppe steht, ist diese Gruppierung insbesondere eine über Methylen gebundene aromatische Gruppe, insbesondere eine Benzylgruppe.

Falls R⁵, R⁶, R⁷, R⁸, R⁹, R^{9'} oder R¹⁰ für eine Alkylarylgruppe steht, ist diese insbesondere eine über Phenylen gebundene C₁- bis C₂₀-Alkylgruppe, wie beispielsweise Tolyl oder Xylyl.

Die Reste R² sind vorzugsweise die Substituenten der Formeln 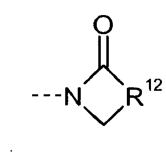 und ---O-R¹⁸ Als Substituent der Formel 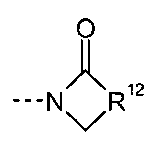 ist ε-Caprolactam nach Entfernung des NH-Protons bevorzugt.

Als besonders bevorzugte Reste R² sind Monophenole oder Polyphenole, insbesondere Bisphenole, nach Entfernung eines phenolischen Wasserstoffatoms zu betrachten. Bevorzugte Bespiele für derartigen Reste R² sind Reste, welche ausgewählt sind aus der Gruppe bestehend aus

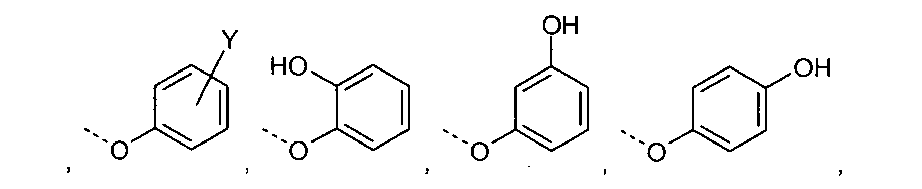

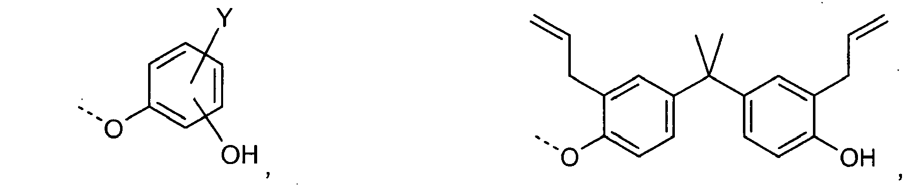

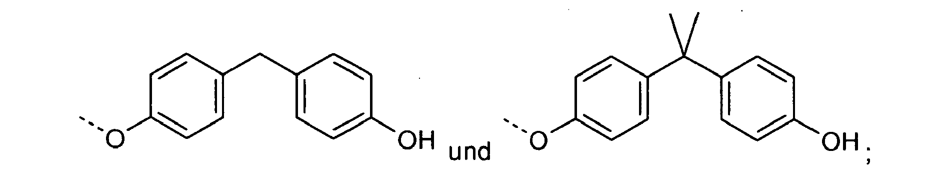

Der Rest Y steht hierbei für einen gesättigten oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl oder ein ungesättigter C₁₅-Alkylrest mit 1 bis 3 Doppelbindungen bevorzugt.

In einer möglichen Ausführungsform ist m = 0. In diesem Fall steht q bevorzugt für 1.

Besonders bevorzugt ist m jedoch > 0. Weiterhin bevorzugt ist q = 0. In einer sehr bevorzugten Ausführungsform ist m+q = 1, insbesondere der Fall, wo m = 1 und q= 0 ist. In dieser Ausführungsform weist das derivatisierte Epoxid-Festharz in der Seitenkette ebenfalls mindestens eine Epoxidgruppe auf, welche dann bei der Vernetzung ebenfalls reagieren kann und damit insbesondere vorteilhaften Einfluss auf die Mechanik haben kann.

Als Rest R⁴ ist insbesondere ein dreiwertiger Rest der Formel 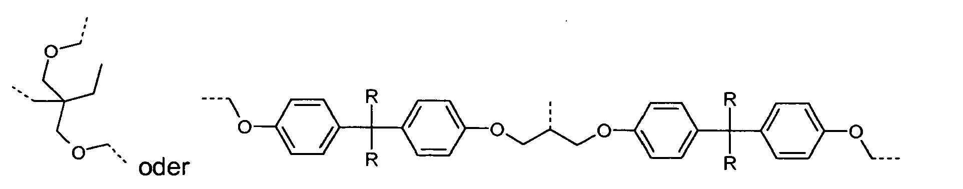 bevorzugt, wobei R für Methyl oder H steht.

Besonders bevorzugt steht R⁴ für einen Rest, welcher ausgewählt ist aus der Gruppe bestehend aus Butandiolmonoglycidylether, Hexandiolmonoglycidylether, Trimethylolpropandiglycidylether, Glycerindiglycidylether, Pentaerythrittriglycidylether, Glycidol, 3-Glycidyloxybenzylalkohol, Hydroxymethyl-cyclohexenoxid und 1,3-bis(4-(2-(4-(oxiran-2-ylmethoxy)phenyl)propan-2-yl)-phenoxy)propan-2-ol) nach Entfernung aller OH- und Epoxid-Gruppen.

Die Herstellung des derivatisierten Epoxid-Festharz erfolgt, indem in einem ersten Schritt durch die Herstellung eines teilweise blockierten Polyurethanprepolymer der Formel (IV), welches aus dem Isocyanatgruppen terminierten linearen oder verzweigten Polyurethanprepolymer **PU1** und der Verbindung R²H und/oder einer Verbindung der Formel (V) gebildet wird.

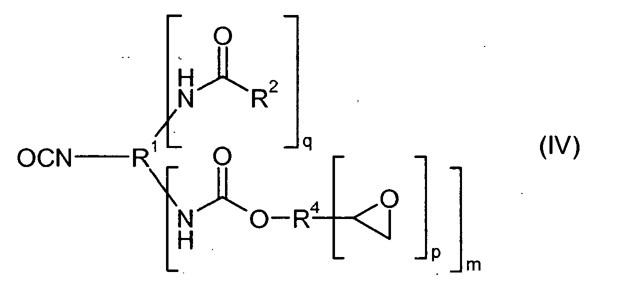

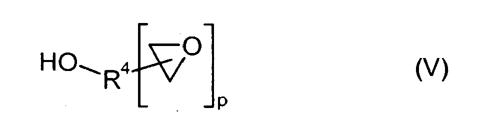

In einem zweiten Schritt wird dann dieses NCO-Gruppenhaltige Zwischenprodukt der Formel (IV) mit einem Festharz der Formel (I') zum derivatisierten Epoxid-Festharz der Formel (I) umgesetzt.

Falls mehrere derartige Isocyanat-reaktive Verbindungen der Formel R²H und/oder der Formel (V) eingesetzt werden, kann die Reaktion sequentiell oder mit einer Mischung dieser Verbindungen erfolgen.
Die Umsetzung erfolgt vorteilhaft derart, dass die eine oder die mehreren Isocyanat-reaktiven Verbindungen in einer leicht unterstöchiometrischen Menge in Bezug auf die NCO-Gruppen eingesetzt werden. So wird gewährleistet, dass das Umsetzungsprodukt einen möglichst grossen Anteil am eine NCO-Gruppe aufweisenden Polyurethanprepolymer der Formel (IV) aufweist. Wenn der Anteil der Polyurethanprepolymere, welche nach der Reaktion mehr als eine Isocyanatgruppe aufweisen, zu gross ist, wird bei der Umsetzung mit dem Epoxid-Festharz eine unerwünschte hohe Viskositätserhöhung, beziehungsweise Gelierung, erhalten. Wenn der Anteil der Polyurethanprepolymere, welche nach der Reaktion keine freie Isocyanatgruppe mehr aufweist, allzu gross ist, sind viele derartige Umsetzungsprodukte vorhanden, welche nicht mit dem Festharz reagieren.

Die Monohydroxyl-Epoxidverbindung der Formel (V) weist 1, 2 oder 3 Epoxidgruppen auf. Die Hydroxylgruppe dieser Monohydroxyl-Epoxidverbindung (V) kann eine primäre oder eine sekundäre Hydroxylgruppe darstellen.

Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Butandiolmonoglycidylether (enthalten in Butandioldiglycidylether), Hexandiolmonoglycidylether (enthalten in Hexandioldiglycidylether), Cyclohexandimethanolglycidylether, Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.

Es können aber auch andere ähnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (IX), der in handelsüblichen flüssigen Epoxidharzen, hergestellt aus Bisphenol-A (R = CH₃) und Epichlorhydrin, zu etwa 15 % enthalten ist, sowie die entsprechenden β-Hydroxyether der Formel (IX), die bei der Reaktion von Bisphenol-F (R = H) oder des Gemisches von Bisphenol-A und Bisphenol-F mit Epichlorhydrin gebildet werden.

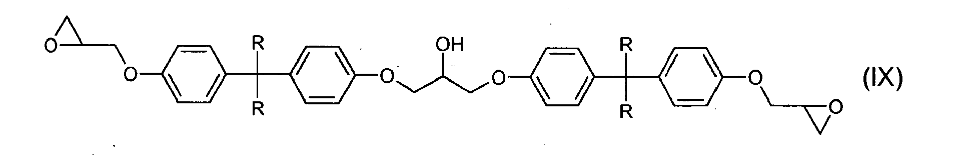

Weiterhin bevorzugt sind auch Destillationsrückstände, welche bei der Herstellung von hochreinen, destillierten Epoxid-Flüssigharzen anfallen. Solche Destillationsrückstände weisen eine bis zu drei Mal höhere Konzentration an hydroxylhaltigen Epoxiden auf als handelübliche undestillierte Epoxid-Flüssigharze. Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Die freie primäre oder sekundäre OH-Funktionalität der Monohydroxyl-Epoxidverbindung der entsprechenden Formel (V) lässt eine effiziente Umsetzung mit terminalen Isocyanatgruppen von Prepolymeren zu, ohne dafür unverhältnismässige Überschüsse der Epoxidkomponente einsetzen zu müssen.

Das Polyurethanprepolymer **PU1, auf** dem R¹ basiert, lässt sich aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}** herstellen.

In der gesamten hier vorliegenden Schrift werden mit der Vorsilbe "Poly" in "Polyisocyanat", "Polyol", "Polyphenol" und "Polymerkaptan" Moleküle bezeichnet, die formal zwei oder mehr der jeweiligen funktionellen Gruppen enthalten.

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.

Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere **Q_{PM}** geeignet sind Polyole, beispielsweise die folgenden handelsüblichen Polyole oder beliebige Mischungen davon:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Besonders geeignet sind Polyoxypropylendiole und -triole mit einem Ungesättigtheitsgrad tiefer als 0.02 mEq/g und mit einem Molekulargewicht im Bereich von 1000 - 30'000 Dalton, Polyoxybutylendiole und -triole, Polyoxypropylendiole und -triole mit einem Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril gepfropfte Polyetherpolyole, wie sie beispielsweise von Elastogran unter dem Namen Lupranol® geliefert werden;
- Polyhydroxyterminierte Acrylnitril/Butadien-Copolymere, wie sie beispielsweise aus carboxylterminierten Acrylnitril/Butadien-Copolymeren (kommerziell erhältlich unter dem Namen Hycar® CTBN von Nanoresins AG, Deutschland) und Epoxiden oder Aminoalkoholen hergestellt werden können;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Vorteilhaft sind die Polymere **Q_{PM}** di- oder höherfunktioneller Polyole mit OH-Equivalentsgewichten von 300 bis 6'000 g/OH-Equivalent, insbesondere von 600 bis 4000 g/OH-Equivalent, vorzugsweise 700 - 2200 g/OH-Equivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Butadien/Acrylnitril-Copolymeren, hydroxylterminierten synthetischen Kautschuken, deren Hydrierungsprodukten und Gemischen dieser genannten Polyole.

Im Weiteren können als Polymere **Q_{PM}** auch di- oder höherfunktionelle aminoterminierte Polyethylenether, Polypropylenether, wie sie zum Beispiel unter dem Namen Jeffamine® von Huntsman vertrieben werden, Polybutylenether, Polybutadiene, Butadien/Acrylnitril-Copolymere, wie sie zum Beispiel die unter dem Namen Hycar® ATBN von Nanoresins AG, Deutschland vertrieben werden, sowie weitere aminoterminierte synthetische Kautschuke oder Gemische der genannte Komponenten verwendet werden.

Für gewisse Anwendungen sind als Polymere **Q_{PM}** insbesondere Hydroxyl-Gruppen aufweisende Polybutadiene oder Polyisoprene oder deren partiell oder vollständig hydrierte Reaktionsprodukte geeignet.

Es ist weiterhin möglich, dass die Polymere **Q_{PM}** auch kettenverlängert sein können, wie es in dem Fachmann bekannter Art und Weise durch die Reaktion von Polyaminen, Polyolen und Polyisocyanaten, insbesondere von Diaminen, Diolen und Diisocyanaten, durchgeführt werden kann.

Am Beispiel eines Diisocyanates und eines Diols bildet sich daraus, wie im Folgenden gezeigt, je nach gewählter Stöchiometrie eine Spezies der Formel (VI) oder (VII) 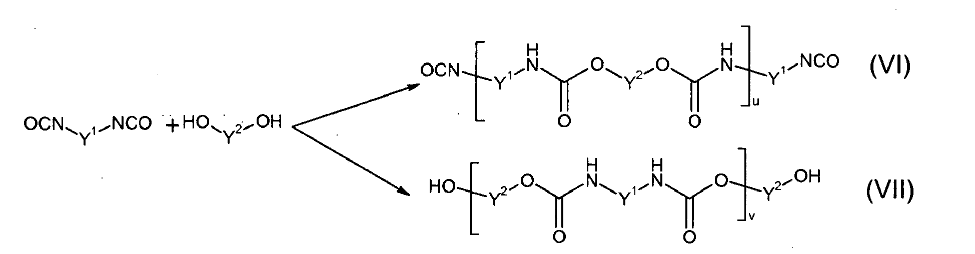 Die Reste Y¹ und Y² stellen einen divalenten organischen Rest dar und die Indizes u und v variieren je nach Stöchiometrieverhältnis von 1 bis typischerweise 5.

Diese Spezies der Formel (VI) oder (VII) können dann wiederum weiterreagiert werden. So kann beispielsweise aus der Spezies der Formel (VI) und einem Diol mit einem divalenten organischen Rest Y³ ein kettenverlängertes Polyurethanprepolymer **PU1** der folgenden Formel gebildet werden:

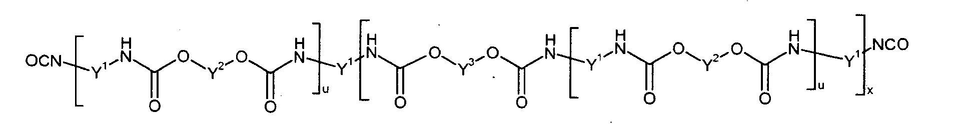

Aus der Spezies der Formel (VII) und einem Diisocyanat mit einem divalenten organischen Rest Y⁴ kann ein kettenverlängertes Polyurethanprepolymer **PU1** der folgenden Formel gebildet werden:

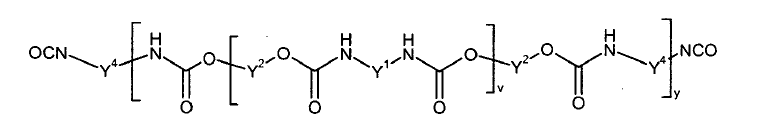

Die Indizes x und y variieren je nach Stöchiometrieverhältnis von 1 bis typischerweise 5, und sind insbesondere 1 oder 2.

Weiterhin kann auch die Spezies der Formel (VI) mit der Spezies der Formel (VII) umgesetzt werden, so dass ein NCO Gruppen aufweisendes kettenverlängertes Polyurethanprepolymer **PU1** entsteht.

Für die Kettenverlängerung werden insbesondere Diole und/oder Diamine und Diisocyanate bevorzugt. Selbstverständlich ist dem Fachmann klar, dass auch höherfunktionelle Polyole, wie beispielsweise Trimethylolpropan oder Pentaerythrit, oder höherfunktionelle Polyisocyanate, wie Isocyanurate von Diisocyanaten, für die Kettenverlängerung verwendet werden können.

Bei den Polyurethanprepolymeren **PU1** generell und bei den kettenverlängerten Polyurethanprepolymeren im Speziellen ist vorteilhaft darauf zu achten, dass die Prepolymere nicht zu hohe Viskositäten aufweisen, insbesondere wenn höher funktionelle Verbindungen für die Kettenverlängerung eingesetzt werden, denn dies kann deren Umsetzung zu den Polymeren der Formel (I) beziehungsweise die Applikation der Zusammensetzung erschweren.

Als Polymere **Q_{PM}** bevorzugt sind Polyole mit Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierten Polybutadienen, hydroxylterminierten Butadien-Acrylnitril-Copolymeren sowie deren Gemische.

Als Polymere **Q_{PM}** sind insbesondere bevorzugt α,ω-Dihydroxypolyalky-lenglykole mit C₂-C₆-Alkylengruppen oder mit gemischten C₂-C₆- Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Durch die Art und Stellung eines solchen Substituenten wird unter anderem die für die Bildung des Polyurethanprepolymeren **PU1** nötige Reaktion mit Isocyanaten beeinflusst.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methano-indan, Phenolpthalein, Fluorescein, 4,4'-[bis-(hydroxyphenyl)-1,3-Phenylene-bis-(1-Methyl-ethyliden)] (=Bisphenol-M), 4,4'-[bis-(hydroxyphenyl)-1,4-Phenylenebis-(1-Methyl-ethyliden)] (=Bisphenol-P), 2,2'-Diallyl-bisphenol-A, Diphenole und Dikresole hergestellt durch Umsetzung von Phenolen oder Kresolen mit Di-isopropylidenbenzol, Phloroglucin, Gallsäureester, Phenol- oder Kresolnovolacke mit -OH-Funktionalität von 2.0 bis 3.5 sowie alle Isomeren der vorgenannten Verbindungen.

Bevorzugte Diphenole und Dikresole hergestellt durch Umsetzung von Phenolen oder Kresolen mit Di-isopropylidenbenzol weisen eine chemische Strukturformel auf, wie sie entsprechend für Kresol als Bespiel nachfolgend gezeigt ist:

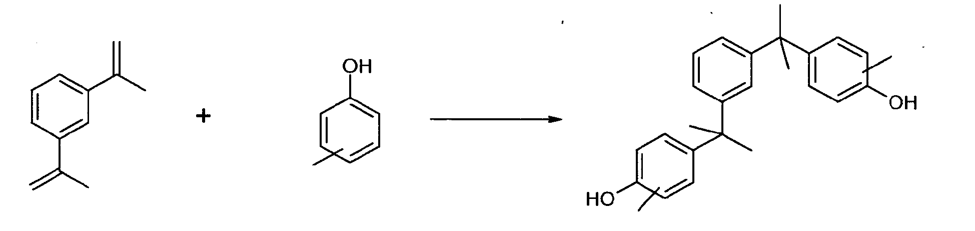

Besonders bevorzugt sind schwerflüchtige Bisphenole. Als meist bevorzugt gelten Bisphenol-M, Bisphenol-S und 2,2'-Diallyl-Bisphenol-A.

Bevorzugt weist das **Q_{PP}** 2 oder 3 phenolische Gruppen auf.

In einer ersten Ausführungsform wird das Polyurethanprepolymer **PU1** aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanprepolymers **PU1** erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren Q_{PM} eingesetzt wird.

In einer zweiten Ausführungsform wird das Polyurethanprepolymer **PU1** aus mindestens einem Diisocyanat oder Triisocyanat sowie aus einem, gegebenenfalls substituierten, Polyphenol **Q_{PP}** hergestellt. Die Herstellung des Polyurethanprepolymers **PU1** erfolgt in einer dem Polyurethan-Fachmann bekannter Art und Weise, insbesondere indem das Diisocyanat oder Triisocyanat in einem stöchiometrischen Überschuss in Bezug auf die phenolischen Gruppen des Polyphenols **Q_{PP}** eingesetzt wird.

In einer dritten Ausführungsform wird das Polyurethanprepolymer **PU1** aus mindestens einem Diisocyanat oder Triisocyanat sowie aus einem Polymeren **Q_{PM}** mit endständigen Amino-, Thiol- oder Hydroxylgruppen sowie aus einem, gegebenenfalls substituierten, Polyphenol **Q_{PP}** hergestellt. Zur Herstellung des Polyurethanprepolymers **PU1** aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}** stehen unterschiedliche Möglichkeiten zur Verfügung.
In einem ersten Verfahren, "Eintopfverfahren" genannt, wird eine Mischung von mindestens einem Polyphenol **Q_{PP}** und mindestens einem Polymeren **Q_{PM}** mit mindestens einem Diisocyanat oder Triisocyanat in einem Isocyanatüberschuss umgesetzt.

In einem zweiten Verfahren, "2-Schrittverfahren I" genannt, wird mindestens ein Polyphenol **Q_{PP}** mit mindestens einem Diisocyanat oder Triisocyanat in einem Isocyanatüberschuss und anschliessend mit mindestens einem Polymeren **Q_{PM}** in Unterschuss umgesetzt.
Im dritten Verfahren schliesslich, "2-Schrittverfahren II" genannt, wird mindestens ein Polymer **Q_{PM}** mit mindestens einem Diisocyanat oder Triisocyanat in einem Isocyanatüberschuss und anschliessend mit mindestens einem Polyphenol **Q_{PP}** in Unterschuss umgesetzt.

Die drei Verfahren führen zu Isocyanat-terminierten Polyurethanprepolymeren **PU1,** die sich bei gleicher Zusammensetzung in der Sequenz ihrer Bausteine unterscheiden können. Es sind alle drei Verfahren geeignet, jedoch ist das "2-Schrittverfahren II" bevorzugt.
Werden die beschriebenen Isocyanat-endständigen Polyurethanprepolymeren **PU1** aus difunktionellen Komponenten aufgebaut, zeigte sich, dass das Equivalenz-Verhältnis Polymer **Q_{PM}**/Polyphenol **Q_{PP}** bevorzugt grösser als 1.50 und das Equivalenz-Verhältnis Polyisocyanat/(Polyphenol **Q_{PP}** + Polymer **Q_{PM})** bevorzugt grösser als 1.20 ist.
Wird die durchschnittliche Funktionalität der verwendeten Komponenten grösser als 2, so erfolgt eine raschere Molekulargewichtserhöhung als im rein difunktionellen Fall. Für den Fachmann ist klar, dass die Grenzen der möglichen Equivalenz-Verhältnisse stark davon abhängen, ob entweder das gewählte Polymer **Q_{PM},** das Polyphenol **Q_{PP},** das Polyisocyanat oder mehrere der genannten Komponenten eine Funktionalität >2 besitzen. Je nach dem können unterschiedliche Equivalenz-Verhältnisse eingestellt werden, deren Grenzen durch die Viskosität der resultierenden Polymere bestimmt wird und die experimentell von Fall zu Fall bestimmt werden müssen.
Das Polyurethanprepolymer **PU1** weist bevorzugt elastischen Charakter auf und zeigt eine Glasumwandlungstemperatur Tg von kleiner als 0°C.

Das derivatisierte Epoxid-Festharz der Formel (I) ist bei Raumtemperatur fest und lässt sich einfach zu Granulat oder zu Schuppen, Brocken, Pulver oder Perlen, insbesondere aus dem aufgeschmolzenen Zustand, verarbeiten, welche einfach dosiert werden können.

Das derivatisierte Epoxid-Festharz der Formel (I) lässt sich breit einsetzen. Es lässt sich alleine oder in einer Zusammensetzung verwenden.
Das derivatisierte Epoxid-Festharz der Formel (I) lässt sich wie ein übliches Festharz einsetzen. Bei der Aushärtung dieses Epoxidharzes können jedoch bedeutend höhere Schlagzähigkeiten festgestellt werden, als dies der Fall mit üblichen Epoxidharzen der Fall ist.
Bevorzugt sind Zusammensetzungen, welche ein derartiges derivatisiertes Epoxid-Festharz umfassen, insbesondere zu einem Anteil von 5 - 60 Gew.-%, bezogen auf das Gewicht der Zusammensetzung.

In einer besonders bevorzugten Ausführungsform enthält die Zusammensetzung neben einem oben beschriebenen derivatisierten Epoxid-Festharz
- mindestens ein Epoxidharz **A** mit durchschnittlich mehr als einer Epoxidgruppe pro Molekül;
- mindestens einen Härter **B** für Epoxidharze, welcher durch erhöhte Temperatur aktiviert wird.

Die Epoxidgruppe des Epoxidharzes **A** liegt vorzugsweise als Glycidylethergruppe vor. Das Epoxidharz **A** mit durchschnittlich mehr als einer Epoxidgruppe pro Molekül ist vorzugsweise ein Epoxid-Flüssigharz oder ein Epoxid-Festharz. Die Möglichkeiten für ein Festharz sind dieselben, wie sie bereits für die Herstellung des derivatisierten Epoxid-Festharzes der Formel (I) beschrieben wurden.

Bevorzugte Epoxid-Flüssigharze weisen die Formel (XI) auf

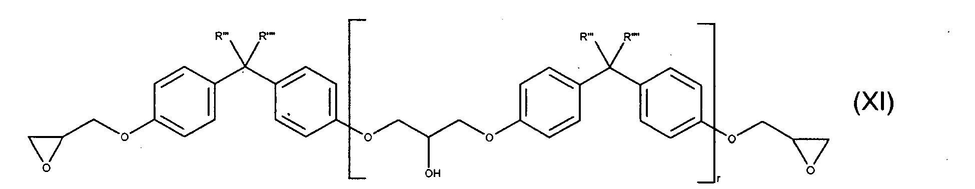

Hierbei stehen die Substituenten R'" und R"" unabhängig voneinander entweder für H oder CH₃. Weiterhin steht der Index r für einen Wert von 0 bis

### 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung ,A/F' verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Bevorzugt stellt das Epoxidharz **A** ein Epoxid-Flüssigharz der Formel (XI) dar. In einer noch mehr bevorzugten Ausführungsform enthält die hitzehärtende Epoxidharzzusammensetzung sowohl mindestens ein Epoxid-Flüssigharz der Formel (XI) als auch mindestens ein Epoxid-Festharz der Formel (I').

Der Anteil von Epoxidharzes **A** beträgt vorzugsweise 10-85 Gew.-%, insbesondere 15-70 Gew.-%, bevorzugt 15 - 60 Gew.-%, am Gewicht der Zusammensetzung.

Beim Härter **B** für Epoxidharze, welcher durch erhöhte Temperatur aktiviert wird, handelt es sich vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-Chlor-4-Methylphenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole und Amin-Komplexe eingesetzt werden.
Bevorzugt handelt es sich beim Härter **B** um einen Härter, welcher ausgewählt ist aus der Gruppe bestehend aus Dicyandiamid, Guanamine, Guanidine, Aminoguanidine und deren Derivate; substituierte Harnstoffe, insbesondere 3-Chlor-4-Methylphenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), sowie Imidazole und Amin-Komplexe.
Besonders bevorzugt als Härter **B** ist Dicyandiamid.
Vorteilhaft beträgt der Gesamtanteil des Härters **B** 0.5 - 12 Gewichts-%, vorzugsweise 2-8 Gewichts-%, bezogen auf das Gewicht der gesamten Zusammensetzung.

Die Zusammensetzung kann weiterhin ein Thixotropiermittel C auf Basis eines Harnstoffderivates enthalten. Das Harnstoffderivat ist insbesondere ein Umsetzungsprodukt eines aromatischen monomeren Diisocyanates mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenyl-methylendiisocyanat (MDI) mit Butylamin erwiesen.
Das Harnstoffderivat ist vorzugsweise in einem Trägermaterial vorhanden. Das Trägermaterial kann ein Weichmacher, insbesondere ein Phthalat oder ein Adipat sein, vorzugsweise ein Diisodecylphthalat (DIDP) oder Dioctyladipat (DOA). Das Trägermittel kann auch ein nicht-diffundierendes Trägermittel sein. Dies ist bevorzugt, um möglichst eine geringe Migration nach Aushärtung von nicht regierten Bestandteilen zu gewährleisten. Bevorzugt sind als nicht-diffundierende Trägermittel blockierte Polyurethanprepolymere.
Die Herstellung von solchen bevorzugten Harnstoffderivaten und Trägermaterialien sind im Detail in der Patentanmeldung EP 1 152 019 A1 beschrieben. Das Trägermaterial ist vorteilhaft ein blockiertes Polyurethanprepolymer **PU2,** insbesondere erhalten durch Umsetzung eines trifunktionellen Polyetherpolyols mit IPDI und anschliessender Blockierung der endständigen Isocyanatgruppen mit ε-Caprolactam.

Vorteilhaft beträgt der Gesamtanteil des Thixotropiermittels **C** 0 - 40 Gewichts-%, vorzugsweise 5 - 25 % Gewichts-%, bezogen auf das Gewicht der gesamten Zusammensetzung. Das Verhältnis vom Gewicht des Harnstoffderivates zum Gewicht des allenfalls vorhandenen Trägermittels beträgt vorzugsweise 2/98 bis 50 / 50, insbesondere 5/95-25 /75.

Die Zusammensetzung enthält vorzugsweise weiterhin einen Zähigkeitsverbesserer D. Unter einem "Zähigkeitsverbesserer" wird hierbei und im Folgenden ein Zusatz zu einer reaktiven Matrix verstanden, der bereits bei geringen Zuschlägen von 0.1, - 15 Gew.-%, insbesondere von 0.5 - 8 Gew.-%, eine deutliche Zunahme der Zähigkeit nach der Härtung der reaktiven Matrix bewirkt und somit in der Lage ist, höherer Biege-, Zug-, Schlag- oder Stossbeanspruchung aufzunehmen, bevor die gehärtete Matrix einreisst oder bricht.
Der Zähigkeitsverbesserer kann ein Flüssigkautschuk **D'** oder ein fester Zähigkeitsverbesserer **E** sein.

Der Zähigkeitsverbesserer **D** ist insbesondere ein carboxyl- oder epoxid-terminiertes Polymer, insbesondere ein carboxyl- oder epoxid-terminiertes Acrylnitril/Butadien-Copolymer, oder ein Derivat davon, oder ein Blockcopolymer.
In einer ersten Ausführungsform ist der Flüssigkautschuk **D'** ein carboxyl- oder epoxidterminiertes Acrylnitril/Butadien-Copolymer oder ein Derivat davon. Derartige Flüssigkautschuke sind beispielsweise unter dem unter dem Namen Hycar® CTBN und CTBNX und ETBN von Nanoresins AG, Deutschland kommerziell erhältlich. Als Derivate sind insbesondere Epoxid-gruppen aufweisende Elastomer-modifizierte Prepolymere, wie sie unter der Produktelinie Polydis®, vorzugsweise aus der Produktelinie Potydis® 36.., von der Firma Struktol® (Schill+Seilacher Gruppe, Deutschland) oder unter der Produktelinie Albipox (Nanoresins, Deutschland) kommerziell vertrieben werden, geeignet.

Es ist dem Fachmann klar, dass natürlich auch Mischungen von Flüssigkautschuken verwendet werden können, insbesondere Mischungen von carboxyl- oder epoxidterminierten Acrylnitril/Butadien-Copolymeren oder von Derivaten davon.

In einer zweiten Ausführungsform ist dieser Flüssigkautschuk **D'** ein Polyacrylatflüssigkautschuk, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.

In einer dritten Ausführungsform ist der Flüssigkautschuk **D'** ein Flüssigkautschuk der Formel (III). 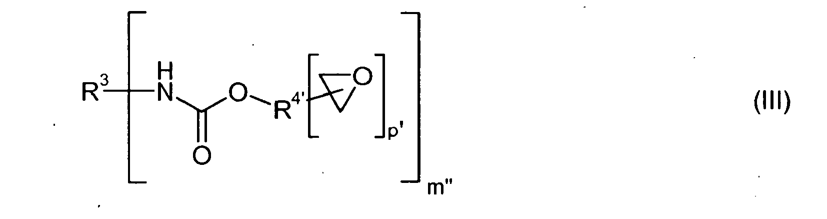 wobei R³ für ein mit m" Isocyanatgruppen terminiertes lineares oder verzweigtes Polyurethanprepolymer **PU1'** nach dem Entfernen aller endständigen Isocyanatgruppen steht,
R^{4'} steht für einen Rest eines eine primäre oder sekundäre Hydroxylgruppe enthaltenden aliphatischen, cycloaliphatischen, aromatischen oder araliphatischen Epoxids nach dem Entfernen der Hydroxyl- und Epoxidgruppen. Die detaillierten Möglichkeiten und bevorzugten Ausführungsformen für R^{4'} entsprechen denjenigen von R⁴, wie sie für die Formel (I) resp. Formel (V) bereits vorgängig beschrieben wurden.
p' steht für die Werte 1, 2 oder 3. Die detaillierten Möglichkeiten und bevorzugten Ausführungsformen für p' entsprechen denjenigen von p, wie sie für die Formel (I) resp. Formel (V) bereits vorgängig beschrieben wurden.
m" steht für einen Wert m ≥ 0. Die detaillierten Möglichkeiten und bevorzugten Ausführungsformen für m" entsprechen denjenigen von m, wie sie für die Formel (I) resp. Formel (IV) bereits vorgängig beschrieben wurden.

Die Möglichkeiten und Details für die Herstellung des Isocyanat-gruppen terminiertes linearen oder verzweigten Polyurethanprepolymers **PU1'** entsprechen denjenigen, wie sie bereits für das Isocyanatgruppen terminierte lineare oder verzweigte Polyurethanprepolymer **PU1** beschrieben wurden.

In einer bevorzugten Ausführungsform enthält die Zusammensetzung mindestens einen epoxidfunktionellen Flüssigkautschuk auf Basis eines Acrylnitril/Butadien-Copolymers und mindestens einen epoxidfunktionellen Flüssigkautschuk der Formel (III).

Der feste Zähigkeitsverbesserer **E** ist in einer ersten Ausführungsform ein organisches lonen-getauschtes Schichtmineral **E1.**

Das lonen-getauschte Schichtmineral **E1** kann entweder ein Kationen-getauschtes Schichtmineral **E1c** oder ein Anionen-getauschtes Schichtmineral **E1a** sein.

Das Kationen-getauschte Schichtmineral **E1c** wird hierbei erhalten aus einem Schichtmineral **E1',** bei welchem zumindest ein Teil der Kationen durch organische Kationen ausgetauscht worden sind. Beispiele für derartige Kationen-getauschte Schichtmineralien **E1c** sind insbesondere diejenigen, welche in US 5,707,439 oder in US 6,197,849 erwähnt sind. Ebenso ist dort das Verfahren zur Herstellung dieser Kationen-getauschten Schichtminerale **E1c** beschrieben. Bevorzugt als Schichtmineral **E1'** ist ein Schichtsilikat. Insbesondere bevorzugt handelt es sich beim Schichtmineral **E1'** um ein Phyllosilikat, wie sie in US 6,197,849 Spalte 2, Zeile 38 bis Spalte 3, Zeile 5 beschrieben sind, insbesondere um einen Bentonit. Als besonders geeignet haben sich Schichtmineral **E1'** wie Kaolinit oder ein Montmorillionit oder ein Hectorit oder ein IIIit gezeigt.
Zumindest ein Teil der Kationen des Schichtminerals **E1'** wird durch organische Kationen ersetzt. Beispiele für derartige Kationen sind n-Octylammonium, Trimethyldodecylammonium, Dimethyldodecylammonium oder Bis(hydroxyethyl)octadecylammonium oder ähnliche Derivate von Aminen, die aus natürlichen Fetten und Ölen gewonnen werden können; oder Guanidinium Kationen oder Amidiniumkationen; oder Kationen der N-substituierten Derivate von Pyrrolidin, Piperidin, Piperazin, Morpholin, Thiomorpholin; oder Kationen von 1,4-Diazabicyclo[2.2.2]octan (DABCO) und 1-Azabicyclo[2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol Phenazin und 2,2'-Bipyridin. Weiterhin sind geeignet cyclische Amidiniumkationen, insbesondere solche, wie sie in US 6,197,849 in Spalte 3 Zeile 6 bis Spalte 4 Zeile 67 offenbart werden. Cyclische Ammoniumverbindungen zeichnen sich gegenüber linearen Ammoniumverbindungen durch eine erhöhte Thermostabilität aus, da der thermische Hoffmann - Abbau bei ihnen nicht auftreten kann.
Bevorzugte Kationen-getauschte Schichtminerale **E1c** sind dem Fachmann unter dem Term Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) erhältlich.
Das Anionen-getauschte Schichtmineral **E1a** wird hierbei erhalten aus einem Schichtmineral **E1",** bei welchem zumindest ein Teil der Anionen durch organische Anionen ausgetauscht worden sind. Ein Beispiel für ein derartig Anionen-getauschtes Schichtmineral **E1a** ist ein Hydrotalcit **E1",** bei dem zumindest ein Teil der Carbonat-Anionen der Zwischenschichten durch organische Anionen ausgetauscht wurden. Ein weiteres Beispiel sind funktionalisierte Alumoxane wie z. B. in US Patent 6 322890 beschrieben.
Es ist durchaus auch möglich, dass die Zusammensetzung gleichzeitig ein Kationen-getauschtes Schichtmineral **E1c** und ein Anionen-getauschtes Schichtmineral **E1a** enthält.
Der feste Zähigkeitsverbesserer ist in einer zweiten Ausführungsform ein Blockcopolymer **E2.** Das Blockcopolymer **E2** wird erhalten aus einer anionischen oder kontrollierten radikalischen Polymerisation von Methacrylsäureester mit mindestens einem weiteren eine olefinisch Doppelbindung aufweisenden Monomeren. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA) Copolymere, erhältlich z.B. unter dem Namen GELOY 1020 von GE Plastics.
Besonders bevorzugte Blockcopolymere **E2** sind Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

Der feste Zähigkeitsverbesserer **E** ist in einer dritten Ausführungsform ein Core-Shell Polymer **E3.** Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensionspolymerisation mit nachfolgender Pfropfung vorgegeben. Bevorzugte Core-Shell-Polymere sind sogenannte MBS Polymere, welche kommerziell unter dem Handelsnamen Clearstrength™ von Atofina, Paraloid™ von Rohm und Haas oder F-35 1™ von Zeon erhältlich sind.
Besonders bevorzugt sind Core-Shell Polymerpartikel, die bereits als getrockneter Polymerlatex vorliegen. Beispiele hierfür sind GENIOPERL M23A von Wacker mit Polysiloxankern und Acrylatschale, strahlungsvernetzte Kautschukpartikel der NEP Reihe, hergestellt von Eliokem oder Nanoprene von Lanxess oder Paraloid EXL von Rohm und Haas.
Weitere vergleichbare Beispiele für Core-Shell-Polymere werden unter dem Namen Albidur^{™} von Nanoresins AG, Deutschland, angeboten.
Der feste Zähigkeitsverbesserer **E** ist in einer vierten Ausführungsform ein festes Umsetzungsprodukt **E4** eines carboxylierten festen Nitrilkautschuks mit überschüssigem Epoxidharz.

Als fester Zähigkeitsverbesserer **E** sind Core-Shell Polymere bevorzugt.

Die Zusammensetzung enthält den Zähigkeitsverbesserer D vorteilhaft in einer Menge von 1 - 25 Gew.-%, bezogen auf das Gewicht der Zusammensetzung.

In einer weiteren bevorzugten Ausführungsform enthält die Zusammensetzung zusätzlich mindestens einen Füllstoff F. Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, thermoplasticshe Polymerpulver wie Polyamid oder Poly(methylmethacrylat) Keramikhohlkugeln, Glashohlkugeln, organische Hohlkugeln, Glaskugeln, Farbpigmente und Fasern. Als Fasern sind insbesondere Langfasern oder kurzgeschnittene Glasfasern, Kohlefasern, Polyacrylnitrilfasern oder Phenolharzfasern geeignet. thermoplasticshe Polymerpulver wie Polyamid oder Poly(methylmethacrylat) Keramikhohlkugeln, Glashohlkugeln, organische Hohlkugeln, Glaskugeln, Farbpigmente und Fasern. Als Fasern sind insbesondere Langfasern oder kurzgeschnittene Glasfasern, Kohlefasern, Polyacrylnitrilfasern oder Phenolharzfasern geeignet. Als Füllstoff **F** sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs **F** 3 - 50 Gewichts-%, vorzugsweise 5 - 35 Gewichts-%, insbesondere 5 - 25 Gewichts-%, bezogen auf das Gewicht der gesamten Zusammensetzung.

In einer besonders bevorzugten Ausführungsform enthält die Zusammensetzung ein physikalisches oder chemisches Treibmittel, wie es beispielsweise unter dem Handelsnamen Expancel™ der Firma Akzo Nobel oder Celogen™ der Firma Chemtura erhältlich ist. Der Anteil des Treibmittels beträgt vorteilhaft 0.1 - 3 Gew.-%, bezogen auf das Gewicht der Zusammensetzung.

In einer weiteren bevorzugten Ausführungsform enthält die Zusammensetzung zusätzlich mindestens einen Epoxidgruppen-tragenden Reaktivverdünner **G.** Bei diesen Reaktivverdünnern **G** handelt es sich insbesondere um:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-tert.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.5 - 20 Gewichts-%, vorzugsweise 1 - 8 Gewichts-%, bezogen auf das Gewicht der gesamten Zusammensetzung.

Die Zusammensetzung kann weitere Bestandteile, insbesondere Katalysatoren, Hitze- und/oder Lichtstabilisatoren, Thixotropiermittel, Weichmacher, Lösungsmittel, mineralische oder organische Füllstoffe, Treibmittel, Farbstoffe und Pigmente, umfassen.

Die Zusammensetzungen lassen sich besonders als einkomponentige Klebstoffe verwenden. Somit betrifft die Erfindung in einem weiteren Aspekt eine Verwendung der vorgängig beschriebenen Zusammensetzung als einkomponentigen hitzehärtenden Klebstoff. Ein derartiger einkomponentiger Klebstoff weist breite Einsatzmöglichkeiten auf. Insbesondere sind hiermit hitzehärtende einkomponentige Klebstoffe realisierbar, die sich durch eine hohe Schlagzähigkeit, sowohl bei höheren Temperaturen und vor allem bei tiefen Temperaturen, insbesondere zwischen 0°C bis -40°C auszeichnen. Solche Klebstoffe werden für das Verkleben von hitzestabilen Materialien benötigt. Unter hitzestabilen Materialien werden Materialien verstanden, welche bei einer Aushärtetemperatur von 100 - 220 °C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazinkbeschichteter Stahl, und nachträglich phosphatierter Stahl, sowie Aluminium insbesondere in den im Autobau typischerweise vorkommenden Varianten.

Mit einem Klebstoff basierend auf einer erfindungsgemässen Zusammensetzung ist es möglich, die gewünschte Kombination von hoher Crashfestigkeit sowohl hoher als auch tiefer Einsatztemperatur zu erreichen. Zusätzlich hierzu weist die Zusammensetzung hohe mechanische Werte auf. Insbesondere hat sich gezeigt, dass Glasübergangstemperaturen von über 90°C, insbesondere von 100°C oder höher, erreicht werden können, was insbesondere wichtig ist für Anwendungen mit hohen Arbeitstemperaturen.
Ein weiterer Aspekt der Erfindung betrifft somit ein Verfahren zum Verkleben von hitzestabilen Materialien, bei welchem diese Materialien mit einer vorgängig beschriebenen Epoxidharzzusammensetzung kontaktiert werden und welches einen oder mehrere Schritte des Aushärtens bei einer Temperatur von 100 - 220 °C, vorzugsweise 120 - 200°C umfasst. Ein derartiger Klebstoff wird insbesondere zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 100 - 220 °C, vorzugsweise 120 - 200°C.
Ein weiterer Aspekt der vorliegenden Erfindung betrifft einen verklebten Artikel, welcher durch ein Verkleben mit einer vorgängig beschriebenen Zusammensetzung und Erhitzen der verklebten Materialien auf eine Temperatur von 100 - 220 °C, vorzugsweise 120 - 200°C, erhalten wird.
Ein derartiger Artikel ist vorzugsweise ein Fahrzeug oder ein Anbauteil eines Fahrzeugs.
Selbstverständlich können mit einer erfindungsgemässen Zusammensetzung neben hitzehärtenden Klebstoffen auch Dichtmassen oder Beschichtungen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die mittels einer erfindungsgemässen Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.

Es wurde gefunden, dass das derivatisierte Epoxid-Festharz der Formel (I) in hervorragender Art und Weise als Schlagzähigkeitsmodifikator, das heisst als Mittel zur Verbesserung der Schlagzähigkeit, insbesondere von Epoxidharzen, verwendet werden kann.

Eine besonders bevorzugte Anwendung der erfindungsgemässen. hitzehärtenden Epoxidharzzusammensetzung ist die Anwendung als hitzehärtender Rohbauklebstoff im Fahrzeugbau.

Die besonders bevorzugten Zusammensetzungen, welche ein Treibmittel enthalten, lassen sich als Strukturschaum für die Verstärkung sowie Schalldämmung von Hohlräumen, insbesondere von metallischen Strukturen, verwenden. Insbesondere handelt es sich bei diesen Hohlräumen um Hohlräume von Transportmittel, vorzugsweise Automobilen, Bussen, Lastkraftwagen oder Schienenfahrzeugen. Diese metallischen Strukturen, die zu verfüllende Hohlräume aufweisen, sind insbesondere tragende Metallstrukturen, wie beispielsweise A-, B- oder C-Säulen oder Schweller von Automobilen.

Die Zusammensetzung wird insbesondere vor der Elektrotauchlackierung in den Hohlraum appliziert. Später im Lackofen unter Hitzeeinwirkung von 100 - 220 °C, vorzugsweise 120 - 200°C, schäumt diese auf und vernetzt.
Somit betrifft die Erfindung in einem weiteren Aspekt geschäumte Artikel, welche durch ein zumindest partielles Verfüllen eines Hohlraumes mit einer vorgängig beschriebenen Zusammensetzung und Erhitzen der verklebten Materialien auf eine Temperatur von 100 - 220 °C, vorzugsweise 120 - 200°C, erhalten wird.

Dieser geschäumte Artikel ist insbesondere ein Fahrzeug oder ein Anbauteil eines Fahrzeugs.

### Beispiele

Im Folgenden sollen einige Beispiele aufgezeigt werden, welche die Erfindung weiter veranschaulichen, den Umfang der Erfindung aber in keiner Weise beschränken sollen.

### Beispielhafte Herstellung eines monohydroxylhaltigen Epoxides Monohydroxylhaltiges Epoxides MHE1

Trimethylolpropanglycidylether wurde gemäss dem Verfahren in Patent US 5,668,227, Beispiel 1, aus Trimethylolpropan und Epichlorhydrin mit Tetramethylammoniumchlorid und Natronlauge hergestellt. Man erhält ein gelbliches Produkt mit einer Epoxidzahl von 7.5 eq/kg und einem Hydroxylgruppengehalt von 1.8 eq/kg. Aus dem HPLC-MS Spektrum kann geschlossen werden, dass im Wesentlichen ein Gemisch von Trimethylolpropandiglycidylether und Trimethylolpropantriglycidylether vorliegt. Dieses Produkt wurde als *MHE1* eingesetzt.

### Monohydroxylhaltiges Epoxid MHE2

1,3-bis(4-(2-(4-(oxiran-2-ylmethoxy)phenyl)propan-2-yl)phenoxy)-propan-2-ol): 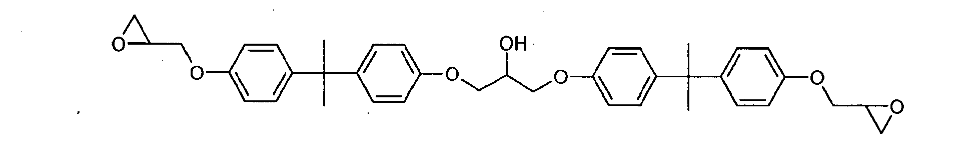 Entsprechend Verbindung der Formel (IX), in welcher mit R für Methyl steht. 1,3-bis(4-(2-(4-(oxiran-2-ylmethoxy)phenyl)propan-2-yl)phenoxy)propan-2-ol) wurde aus technischem Bisphenol-A-diglycidylether (DGEBA) (Araldite® GY 250, Hersteller Huntsman) gewonnen, in welchem es ca. zu 15 Gew.-% vorhanden ist. Es kann durch destillatives Entfernen von DGEBA aufkonzentriert werden. In einem Dünnfilmverdampfer (Hersteller: Fa Ilmag) wird bei 180 °C Heizmanteltemperatur im Ölpumpenvakuum technischer Bisphenol-A-diglycidylether. (EEW = 195 g/Epoxidequivalent, bestimmt durch Titration) mit einer Membranpumpe mit 200 ml/h dosiert. Dabei destilliert reines DGEBA ab, das bei Raumtemperatur kristallisiert. Der verbleibende Sumpf weist ein EEW = 207.1 g/Epoxidequivalent auf. Mit THF als Lösungsmittel zeigt das GPC Diagramm ein Flächenverhältnis der Peaks von "DGEBA-Dimer" und DGEBA von 40:60. Dieses Produkt wurde als *MHE2* eingesetzt.

### Beispiel eines Polyurethanprepolymers: PU1-1

400 g PolyTHF 2000 (OH-Zahl 57.5 mg/g KOH) (BASF) wurden 30 Minuten unter Vakuum bei 100°C getrocknet. Anschliessend wurden 93.9 g IPDI und 0.04 g Dibutylzinndilaurat zugegeben. Die Reaktion wurde unter Vakuum bei 90°C bis zur Konstanz des NCO-Gehaltes bei 3.58% nach 2.5 h geführt (theoretischer NCO-Gehalt: 3.70%).

In zu ***PU1-1*** analoger Art und Weise wurden die Polyurethanprepolymere ***PU1-2, PU1-3*** und ***PU1-4*** aus den Diolen, Triol und Diisocyanaten gemäss Tabelle 1 hergestellt. Für ***PU1-4*** wurde zu Beginn eine Diol/Triol-Mischung verwendet.

**Tabelle 1. Herstellung von beispielhaften Polyurethanprepolymeren.**

| | Diol | Triol | Diisocyanat |
|---|---|---|---|
| ***PU1-1*** | 400 g D1¹ | | 93.9 g IPDI |
| ***PU1-2*** | 300 g D1¹ | | 71.3 g IPDI |
| ***PU1-3*** | 264.8 g D2² | | 35.15 g MDI |
| ***PU1-4*** | 148.16 g D2² | 296.31 g T1³ | 55.53 g IPDI |

| | | | |
|---|---|---|---|
| ¹D1= Polybutylenoxid-Diol (OH-Zahl:57.5 mg/g KOH, OH-Equivalentgewicht: ca.1000 g/OH-Eq.) (Poly-THF 2000, BASF) ²D2= Polypropylenoxid-Diol (OH-Zahl: 28.1 mg/g KOH, OH-Equivalentgewicht: ca. 2000 g/OH-Eq.) ³T1= Polypropylenoxid-Triol (OH-Zahl: 31.2 mg/g KOH, OH-Equivalentgewicht: ca.1800 g/OH-Eq.) | | | |

### Beispiel eines teilweise blockierten Polyurethanprepolymers: TBP-1

Zu den obig beschriebenen 493.94 g Polyurethanprepolymer ***PU1-1*** wurden anschliessend 173.7 g des oben beschriebenen Monohydroxylhaltigen Epoxids ***MHE1*** zugegeben. Es wurde bei 90°C unter Vakuum weitergerührt, bis der NCO-Gehalt nach weiteren 3h konstant bei 0.69 % NCO verblieb.

In zu ***TBP-1*** analoger Art und Weise wurden die teilweise blockierten Polyurethan-prepolymere ***TBP-1, TBP-2, TBP-3, TBP-4*** und ***TBP-5*** aus den Polyurethanprepolymeren und den Blockierungsmittel gemäss Tabelle 2 hergestellt.

**Tabelle 2. Herstellung von beispielhaften teilblockierten Polyurethanprepolymeren der Formel (V).**

| | Polyurethanprepolymer | Blockierungsmittel | NCO-Gehalt |
|---|---|---|---|
| ***TBP-1*** | 493.94 g ***PU1-1*** | 173.7 g ***MHE1*** | 0.69 % |
| ***TBP-2*** | 299.99 g ***PU1-3*** | 184.7 g ***MHE2*** | 0.34% |
| ***TBP-3*** | 299.99 g ***PU1-3*** | 30.5 g NC700¹ | 0.49% |
| ***TBP-4*** | 500.04 g ***PU1-4*** | 249.8 g ***MHE2*** | 0.70 % |

| | | | |
|---|---|---|---|
| ¹NC700 = Cardolite NC700 (Cardanol, meta-substituiertes Alkenyl-mono-Phenol) (Cardolite) | | | |

### Beispiel eines derivatisierten Epoxid-Festharzes: 1

Das teilblockierte Polyurethanprepolymer wurde mit den Hydroxyl-gruppen eines Epoxid-Festharzes in einem Extruder wie folgt umgesetzt:

In einem Zweiwellenextruder (UD 40, Wellendurchmesser 25 mm, Hersteller OMC, Italien) mit neun Heizzonen wurde das Epoxid-Festharz Araldite® GT 7004 (Huntsman)(hergestellt durch Advancement -Reaktion von Bisphenol-A-diglycidylether mit Bisphenol-A, Epoxid-Equivalentgewicht 735 g/ Epoxidequivalent) bei 90 °C und 450 rpm extrudiert. Der Massenfluss betrug 2,640 kg/h. In Heizzone 4 wurde über eine Flüssigdosierung das auf 90 °C erhitzte teilblockierte Polyurethanprepolymer ***TBP-1*** mit 660 ml/h zudosiert. Das derivatisierte Epoxid-Festharz ***1*** fiel nach Durchlaufen eines gekühlten Zweiwalzenkalanders als feste spröde Platten an, die in einer Schlagmühle zerkleinert wurden.

In zu ***1*** analoger Art und Weise wurden die derivatisierten Epoxid-Festharze **2, 3, 4** und **5** aus den teilweise blockierten Polyurethanprepolymere und den Festharzen gemäss Tabelle 3 hergestellt.

**Tabelle 3. Herstellung von beispielhaften derivatisierten Epoxid-festharzen der Formel (I).**

| | teilweise blockiertes Polyurethan prepolymer | Epoxid-Festharz |
|---|---|---|
| ***1*** | ***TBP-1*** | Araldite® GT 7004 (Epoxid-Equivalentgewicht 735 g/ Epoxidequivalent) |
| ***2*** | ***TBP-2*** | Araldite® GT 7071 (Epoxid-Equivalentgewicht 500 g/ Epoxidequivalent) |
| ***3*** | ***TBP-3*** | Araldite® GT 7004 |
| ***4*** | ***TBP-4*** | Araldite® GT 7071 |
| ***5*** | ***TBP-4*** | Araldite® GT 7004 |

### Beispiel von Zusammensetzungen

### Klebstoffe

Es wurden die Klebstoffzusammensetzungen **Z1** bis **Z7** gemäss Tabelle 4 hergestellt. In einem Planetenmischer werden alle Komponenten ausser Dicyandiamid vorgelegt und bei 90 - 100°C im Vakuum eine Stunde gerührt und dann in Kartuschen abgefüllt. Die Prüfung der mechanischen Eigenschaften nach den beschriebenen Prüfmethoden.

### Prüfmethoden:

### Zugscherfestigkeit (ZSF) (DIN EN 1465)

Die Probekörper wurden aus den beschriebenen Zusammensetzungen und mit elektrolytisch verzinktem DC04 Stahl (eloZn) mit dem Mass 100 x 25 x 1.5 mm hergestellt, dabei betrug die Klebfläche 25 x 10 mm bei einer Schichtdicke von 0.3 mm. Gehärtet wurde 30 Min. bei 180°C. Die Zuggeschwindigkeit betrug 10 mm/min.

### Zugfestigkeit (ZF) / Bruchdehnung (BD) / E-Modul (DIN EN ISO 527)

Eine Klebstoffprobe wurde zwischen zwei Teflonpapieren auf eine Schichtdicke von 2 mm verpresst. Anschliessend wurde der Klebstoff während 30 Minuten bei 180°C gehärtet. Die Teflonpapiere wurden entfernt und die Probekörper nach DIN-Norm wurden im heissen Zustand ausgestanzt. Die Prüfkörper wurden nach 1 Tag Lagerung unter Normklima mit einer Zuggeschwindigkeit von 2 mm/min gemessen.

Die Zugfestigkeit, Bruchdehnung und E-Modul (0.05-0.25%) wurde gemäss DIN EN ISO 527 bestimmt.

### Schlagschälarbeit (ISO 11343)

Die Probekörper wurden aus den beschriebenen Zusammensetzungen und mit elektrolytisch verzinktem DC04 Stahl (eloZn) mit dem Mass 90 x 20 x 0.8 mm hergestellt, dabei betrug die Klebfläche 20 x 30 mm bei einer Schichtdicke von 0.3mm. Gehärtet wurde 30 Min. bei 180°C. Die Messung der Schlagschälarbeit erfolgte jeweils bei Raumtemperatur und bei minus 20°C. Die Schlaggeschwindigkeit betrug 2 m/s. Als Bruchenergie (*BE*) in Joule wird die Fläche unter der Messkurve (von 25% bis 90%, gemäss ISO 11343) angegeben.

Die Ergebnisse dieser Prüfungen sind in Tabelle 4 zusammengestellt.

**Tabelle 4. Zusammensetzungen und Resultate.**

| | ***Z1*** | ***Z2*** | ***Z3*** | ***Z4*** | ***Z5*** | ***Z6*** | ***Z7*** |
|---|---|---|---|---|---|---|---|
| DGBEA¹ [GT²] | 50 | 50 | 100 | 100 | 60 | 140 | 140 |
| Struktol³ [GT²] | | | 100 | 100 | 100 | 100 | 100 |
| ***1*** [GT²] | | | | 140 | | 60 | |
| ***2*** [GT²] | 175 | | | | | | |
| ***3*** [GT²] | | | 100 | | 140 | | 60 |
| ***4*** [GT²] | | 175 | | | | | |
| Dicyandiamid [GT²] | 9.6 | 8.4 | 11.9 | 11.1 | 9.2 | 15.8 | 14.8 |
| Füllstoffmischung [GT²] | 85 | 85 | 45 | 45 | 45 | 45 | 45 |
| | | | | | | | |
| E-Modul [MPa] | 1920 | 1802 | 1872 | 1902 | 1328 | 1884 | 1777 |
| ZF [MPa] | 47.1 | 35.5 | 40.2 | 42.4 | 28.0 | 46.2 | 40.8 |
| BD [%] | 7.2 | 3.5 | 6.1 | 8.5 | 5.8 | 7.4 | 5.4 |
| ZSF [MPa] | 24.9 | 22.4 | 30.0 | 29.1 | 22.7 | n.m.⁵ | n.m.⁵ |
| BE⁴ bei 23°C[J] | 12.2 | 15.4 | 11.5 | 17.2 | 10.5 | 14.1 | 14.2 |
| BE⁴ bei -20°C[J] | 9.7 | 11.9 | n.m.⁵ | 7.1 | n.m.⁵ | n.m.⁵ | n.m.⁵ |

| | | | | | | | |
|---|---|---|---|---|---|---|---|
| ¹DGEBA = D.E.R. 330 (Dow)(Epoxid-Flüssigharz) ² GT= Gewichtsteile ³ Struktol = Struktol® Polydis® VP-3611 (Bisphenol-F-Diglycidylether modifizierer Nitril-Butadien-Rubber (EEW = 560 g/val)( Schill&Seilacher) ⁴BE =Bruchenergie ⁵n.m.= nicht gemessen. | | | | | | | |

### Strukturschäume

Es wurden Strukturschäume mit der Zusammensetzung gemäss der Tabelle 5 hergestellt. Hierbei wurden die festen Inhaltsstoffe als Granulat über einen Feststoffdosierer in Zone 1 in einem Zweiwellenextruder (L/D 40, Wellendurchmesser 25 mm, Hersteller OMC, Italien) mit neun Heizzonen, gekühlter Schlitzdüse und gekühltem Zweiwalzenkalanders zu einem spritzgussfähigen Granulat homogenisiert. Typische Einstellungen waren:
Temperaturen in Zone 1-4: 30,70,90,90,Zone 5-9: 90/ 90/ 90/ 85/ 80°C Temperatur der Schmelze am Ausgang 72°C.
Bei den Beispielen ***Ref.1*** und ***Ref. 2*** wurde der hochviskose Flüssigkautschuk ***EP1*** wurde auf 80°C geheizt und über **eine** Flüssigdosierung in Zone 5 eingespritzt. ***EP1*** wurde wie folgt hergestellt:

### Beispiel der Herstellung eines Epoxidgruppen-terminierten Polyurethanprepolymers (EP1)

160 g PolyTHF 1800 (BASF) (OH-Zahl 62.3 m/g KOH), 110 g Liquiflex H H (Hydroxylterminertes Polybutadien, Krahn)(OH-Zahl 46 mg/g KOH) und 130 g Caradol ED 56-10(Difunktionelles Polypropylenglykol, Shell) (OH-Zahl 56 mg/g KOH) wurden 30 Minuten unter Vakuum bei 105°C getrocknet. Nachdem die Temperatur auf 90°C reduziert worden war, wurden 92.5 g IPDI und 0.08 g Dibutylzinndilaurat zugegeben. Die Reaktion wurde unter Vakuum bei 90°C bis zur Konstanz des NCO-Gehaltes bei 3.60% nach 2.5 h geführt (berechneter NCO-Gehalt: 3.62%). Anschliessend wurden zu diesem Polyurethanprepolymer 257.8 g des oben beschriebenen ***MHE1*** zugegeben und die Reaktion wurde bei 90°C unter Vakuum weitergeführt, bis der kein NCO-Gehalt mehr messbar war.

### Prüfmethoden:

### Glasübergangstemperatur (T_{g})

Die Glasübergangstemperatur wurde mittels DSC bestimmt. Es wurde hierfür ein Gerät Mettler DSC822^{e} verwendet. 20 - 30 mg Klebstoffmuster wurden jeweils in einen Aluminiumtiegel eingewogen. Nachdem die Probe im DSC während 30 Min. bei 180°C gehärtet worden war, wurde die Probe auf minus 20°C abgekühlt und anschliessend mit einer Heizrate von 20°C/min bis 150°C aufgeheizt. Die Glasübergangstemperatur wurde mit Hilfe der DSC-Software aus der gemessenen DSC-Kurve bestimmt.

### Zugfestigkeit (ZF) (DIN EN ISO 527)

Eine Klebstoffprobe wurde zwischen zwei Teflonpapieren auf eine Schichtdicke von 2 mm verpresst. Anschliessend wurde der Klebstoff während 30 Minuten bei 180°C gehärtet. Die Teflonpapiere wurden entfernt und die Probekörper nach DIN-Norm wurden im heissen Zustand ausgestanzt. Die Prüfkörper wurden nach 1 Tag Lagerung unter Normklima mit einer Zuggeschwindigkeit von 2 mm/min gemessen.
Die Zugfestigkeit, Bruchdehnung und E-Modul (0.05-0.25%) wurde gemäss DIN EN ISO 527 bestimmt.

### 3-Punkt-Biegung (ISO 178)

Die Probekörper wurden nach ISO 178 einem 3-Punkt-Biegetest unterworfen. Aus dieser Messung resultieren Biegespannung ("BSP"), Biegemodul (im Bereich 0.05-0.25 %) *("BM")* sowie die maximale Durchbiegung "dₘₐₓ".

Die Ergebnisse dieser Prüfungen sind in Tabelle 5 zusammengestellt.

**Tabelle 5. Beispielhafte Strukturschaumzusammensetzungen und deren Mess-resultate.**

| | ***Ref.1*** | ***Ref.2*** | ***SS1*** | ***SS2*** | ***SS3*** | ***SS4*** | ***SS5*** | ***SS6*** |
|---|---|---|---|---|---|---|---|---|
| GT 7004¹ [GT²] | 53.1 | 55.3 | 53.4 | 55.7 | 51.9 | 54.4 | 51.9 | 54.4 |
| Nipol³ [GT²] | 8.6 | 7.3 | 8.6 | 7.3 | 8.6 | 7.3 | 8.6 | 7.3 |
| ***1*** [GT²] | | | | | 8.6 | 7.3 | | |
| ***3*** [GT²] | | | 7 | 5.9 | | | | |
| ***5*** [GT²] | | | | | | | 8.6 | 7.3 |
| ***EP1*** [GT²] | 7.4 | 6.3 | | | | | | |
| Dicyandiamid[GT²] | 1.2 | 1.4 | 1.3 | 1.4 | 1.2 | 1.3 | 1.2 | 1.3 |
| Kevlarfasern[GT²] | 1.4 | 1.4 | 1.4 | 1.4 | 1.4 | 1.4 | 1.4 | 1.4 |
| Glasfasern (3mm) [GT²] | 3.5 | 3.5 | 3.5 | 3.5 | 3.5 | 3.5 | 3.5 | 3.5 |
| Aerosil® R202[GT²] | 2.4 | 2.4 | 2.4 | 2.4 | 2.4 | 2.4 | 2.4 | 2.4 |
| Calciumcarbonat[GT²] | 10.4 | 10.4 | 10.4 | 10.4 | 10.4 | 10.4 | 10.4 | 10.4 |
| Glasfaser (gemahlen)[GT²] | 10.4 | 10.4 | 10.4 | 10.4 | 10.4 | 10.4 | 10.4 | 10.4 |
| Expancel 95DU120⁴ [GT²] | 1.6 | 1.6 | | 1.6 | 1.6 | 1.6 | 1.6 | 1.6 |
| | | | | | | | | |
| T_{g}[°C] | 95 | 99 | 96 | 99 | 91 | 99 | 107 | 108 |
| *ZF* [MPa] | 19.9 | 11.8 | 9.7 | 10.1 | 8.4 | 9.8 | 8.7 5.3 | |
| E-Modul [MPa] | 1096 | 848 | 865 | 945 | 759 | 846 | 502 | 591 |
| *BSP*[MPa] | 19.3 | 18.5 | 16.1 | 14.6 | 24.1 | 13.4 | 15.6 | 11.8 |
| *BM [MPa]* | 1061 | 681 | 858 | 802 | 757 | 496 | 638 | 558 |
| *dₘₐₓ* [mm] | 2.6 | 3.1 | 2.3 | 2.2 | 3.5 | 2.1 | 4.9 | 2.5 |

| | | | | | | | | |
|---|---|---|---|---|---|---|---|---|
| ¹ GT 7004 = Araldite® GT 7004 (Huntsman) ² GT= Gewichtsteile ³ Nipol = Nipol 1472 (Zeon, Granulat eines festen, hochmolekularen carboxylierten Nitrilkauschuks). ⁴ Expancel 95DU120 ist ein Treibmittel, Hersteller Akzo. | | | | | | | | |

## Patentansprüche

1. Derivatisiertes Epoxid-Festharz der Formel (I) 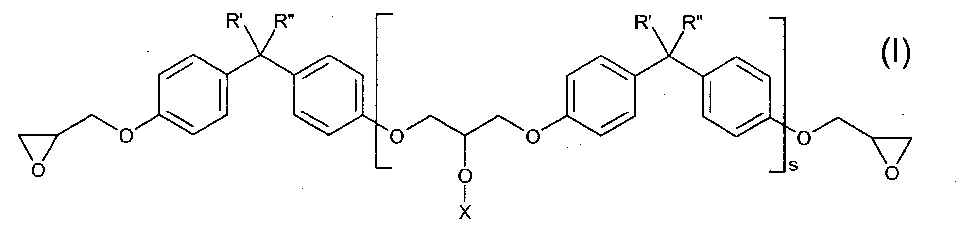 wobei R' und R" unabhängig voneinander entweder für H oder CH₃ steht; X unabhängig voneinander für H oder einen Rest der Formel (II) steht 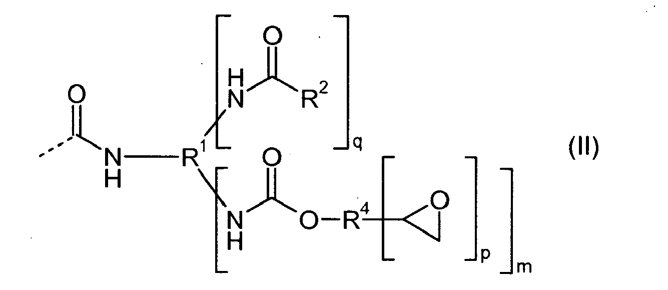 wobei R¹ für ein mit (m+q+1) Isocyanatgruppen terminiertes lineares oder verzweigtes Polyurethanprepolymer PU1 nach dem Entfernen aller endständigen Isocyanatgruppen steht;
R² unabhängig voneinander für eine Blockierungsgruppe, welche sich bei einer Temperatur über 100°C abspaltet, steht;
R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen, steht;
p = 1, 2 oder 3 ist;
m ≥ 0 und q ≥ 0 ist, mit der Bedingung, dass 1 ≤ (m+q) ≤ 8 ist; s für einen Wert von 2 bis 12 steht;
mit der Massgabe, dass mindestens ein X in der Formel (I) für einen Rest der Formel (II) steht.

2. Derivatisiertes Epoxid-Festharz gemäss Anspruch 1, **dadurch gekennzeichnet, dass** in Formel (I) sowohl Reste X, welche für H stehen als auch Reste X, welche für einen Rest der Formel (II) stehen, vorhanden sind.

3. Derivatisiertes Epoxid-Festharz gemäss einem der vorhergehenden Ansprüche, **dadurch gekennzeichnet, dass** R² für einen Rest steht, welcher ausgewählt ist aus der Gruppe bestehend aus 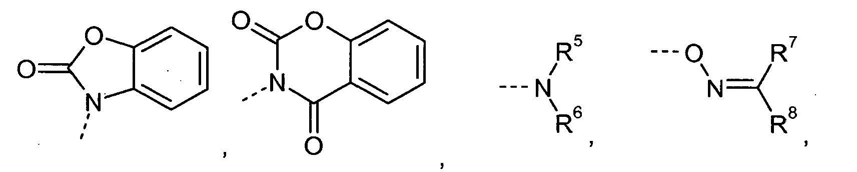 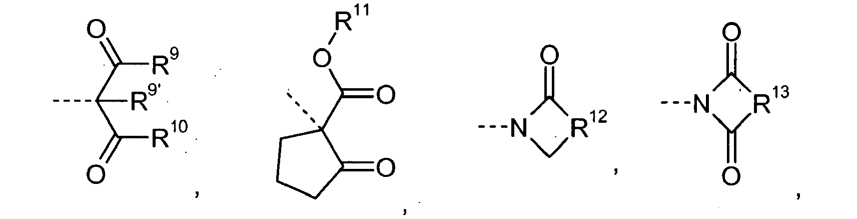 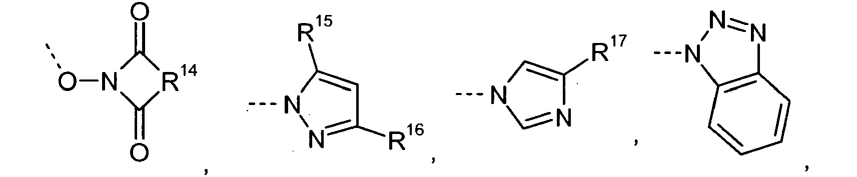 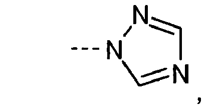 und --- O-R¹⁸.
wobei
R⁵, R⁶, R⁷ und R⁸ je unabhängig voneinander für eine Alkyl- oder Cycloalkyl- oder Aryl- oder Aralkyl- oder Arylalkyl-Gruppe steht
oder R⁵ zusammen mit R⁶, oder R⁷ zusammen mit R⁸, einen Teil eines 4- bis 7-gliedrigen Rings bilden, welcher allenfalls substituiert ist;
R⁹, R^{9'} und R¹⁰ je unabhängig voneinander für eine Alkyl- oder Aralkyl- oder Aryl- oder Arylalkyl-Gruppe oder für eine Alkyloxy- oder Aryloxy-oder Aralkyloxy-Gruppe steht;
R¹¹ für eine Alkylgruppe steht,
R¹² , R¹³ und R¹⁴ je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe stehen;
R¹⁵, R¹⁶ und R¹⁷ je unabhängig voneinander für H oder für eine Alkylgruppe stehen; und
R¹⁸ für eine Aralkylgruppe oder für eine ein- oder mehrkernige substituierte oder unsubstituierte Aromatengruppe steht, welche gegebenenfalls aromatische Hydroxylgruppen aufweist.

4. Derivatisiertes Epoxid-Festharz gemäss einem der vorhergehenden Ansprüche, **dadurch gekennzeichnet, dass** m+q = 1, insbesondere m = 1 und q = 0, ist.

5. Derivatisiertes Epoxid-Festharz gemäss einem der vorhergehenden Ansprüche, **dadurch gekennzeichnet, dass** R⁴ für einen Rest steht, welcher ausgewählt ist aus der Gruppe bestehend aus Butandiolmonoglycidylether, Hexandiolmonoglycidylether, Trimethylolpropandiglycidylether, Glycerindiglycidylether, Pentaerythrittriglycidylether, Glycidol, 3-Glycidyloxybenzylalkohol, Hydroxymethyl-cyclohexenoxid und 1,3-bis(4-(2-(4-(oxiran-2-ylmethoxy)phenyl)propan-2-yl)phenoxy)propan-2-ol) nach Entfernung aller OH- und Epoxid-Gruppen.

6. Derivatisiertes Epoxid-Festharz gemäss einem der vorhergehenden Ansprüche, **dadurch gekennzeichnet, dass** das Polyurethanprepolymer **PU1** hergestellt wird aus mindestens einem Diisocyanat oder Triisocyanat sowie
aus einem Polymeren **Q_{PM}** mit endständigen Amino-, Thiol- oder Hydroxylgruppen;
und / oder
aus einem, gegebenenfalls substituierten, Polyphenol **Q_{PP}.**

7. Zusammensetzung umfassend ein derivatisiertes Epoxid-Festharz nach einem der Ansprüche 1 bis 6.

8. Zusammensetzung gemäss Anspruch 7, **dadurch gekennzeichnet, dass** die Zusammensetzung weiterhin
- mindestens ein Epoxidharz **A** mit durchschnittlich mehr als einer Epoxidgruppe pro Molekül;
- mindestens einen Härter **B** für Epoxidharze, welcher durch erhöhte Temperatur aktiviert wird;
enthält.

9. Zusammensetzung gemäss einem der Ansprüche 7 bis 8, **dadurch gekennzeichnet, dass** die Epoxidharzzusammensetzung mindestens ein Treibmittel, insbesondere in einer Menge von 0.1 - 3 Gew.-%, bezogen auf das Gewicht der Zusammensetzung, enthält.

10. Zusammensetzung gemäss einem der Ansprüche 7 bis 9, **dadurch gekennzeichnet, dass** die Epoxidharzzusammensetzung bei Raumtemperatur fest ist und insbesondere durch Heisspressen und/oder insbesondere im Spritzguss verarbeitbar ist.

11. Verfahren zur Herstellung eines derivatisiertes Epoxid-Festharzes der Formel (I) gemäss einem der Ansprüche 1. bis 6, **dadurch gekennzeichnet**, in einem ersten Schritt ein teilweise blockiertes Polyurethanprepolymer der Formel (IV) aus dem Isocyanatgruppen terminierten linearen oder verzweigten Polyurethanprepolymer **PU1** und der Verbindung R²H und/oder der Formel (V) gebildet wird 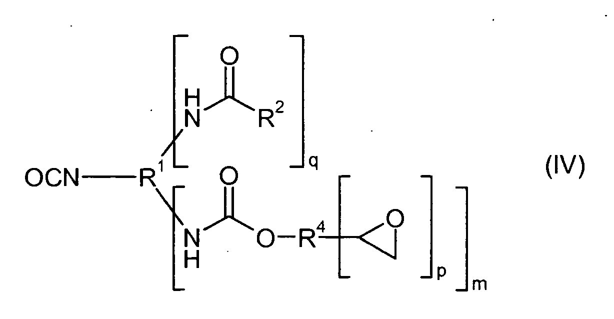 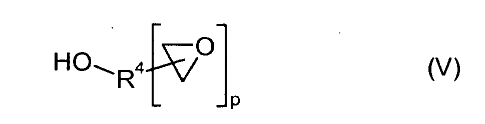 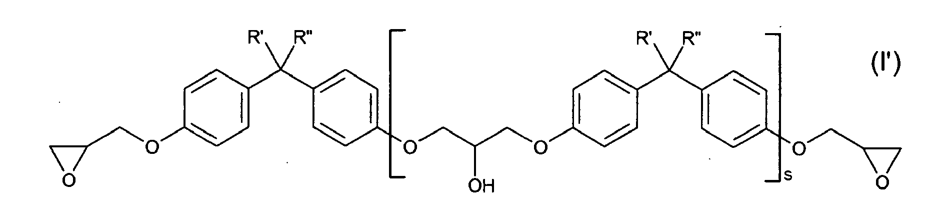 und in einem zweiten Schritt dann dieses NCO-Gruppenhaltige Zwischenprodukt der Formel (IV) mit einem Festharz der Formel (I') zum derivatisierten Epoxid-Festharz der Formel (I) umgesetzt wird.

12. Verwendung eines derivatisierten Epoxidharz gemäss einem der Ansprüche 1 bis 6 als Mittel zur Verbesserung der Schlagzähigkeit, insbesondere von Epoxidharzzusammensetzungen.

13. Verwendung einer Zusammensetzung gemäss einem der Ansprüche 7 bis 10 als einkomponentiger hitzehärtender Klebstoff, insbesondere als hitzehärtender Rohbauklebstoff im Fahrzeugbau.

14. Verwendung einer Zusammensetzung gemäss einem der Ansprüche 7 bis 10 als Strukturschaum für die Verstärkung von Hohlräumen, insbesondere von metallischen Strukturen.

15. Verklebter Artikel, welcher durch ein Verkleben mit einer Zusammensetzung gemäss einem der Ansprüche 7 bis 10 und Erhitzen der verklebten Materialien auf eine Temperatur von 100 - 220 °C, vorzugsweise 120 - 200°C, erhalten wird.

16. Geschäumter Artikel, welcher durch ein zumindest partielles Verfüllen eines Hohlraumes mit einer Zusammensetzung gemäss einem der Ansprüche 7 bis 10 und Erhitzen der verklebten Materialien auf eine Temperatur von 100 - 220 °C, vorzugsweise 120 - 200°C, erhalten wird.

## Claims

1. A derivatized solid epoxy resin of the formula (I) 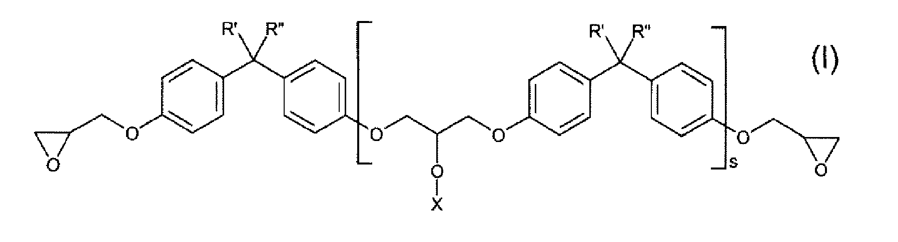 where R' and R", independently of each other, are either H or CH₃;
X, independently of the others, is H or a moiety of the formula (II) 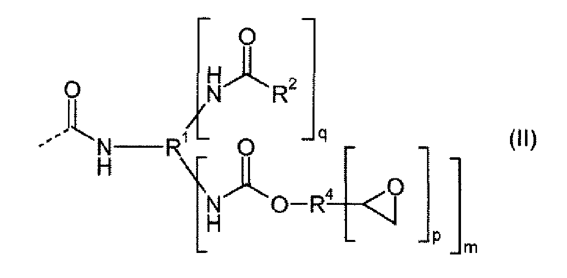 where R¹ is a linear or branched polyurethane prepolymer **PU1** terminated by (m+q+1) isocyanate groups after removal of all of the terminal isocyanate groups;
R², independently of the others, is a capping group which cleaves at a temperature above 100°C;
R⁴ is a moiety of an aliphatic, cycloaliphatic, aromatic, or araliphatic epoxide containing a primary or secondary hydroxy group after the removal of the hydroxide and epoxide groups;
p = 1, 2, or 3;
m ≥ 0, and q ≥ 0, with the condition that 1 ≤ (m+q) ≤ 8;
s is a value from 2 to 12;
with the proviso that at least one X in the formula (I) is a moiety of the formula (II).

2. The derivatized solid epoxy resin as claimed in claim 1, **characterized in that**, in formula (I), the moieties present comprise not only moieties X which are H but also moieties X which are a moiety of the formula (II).

3. The derivatized solid epoxy resin as claimed in any of the preceding claims, **characterized in that** R² is a moiety selected from the group consisting of 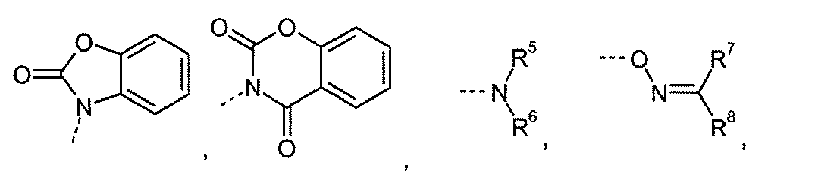 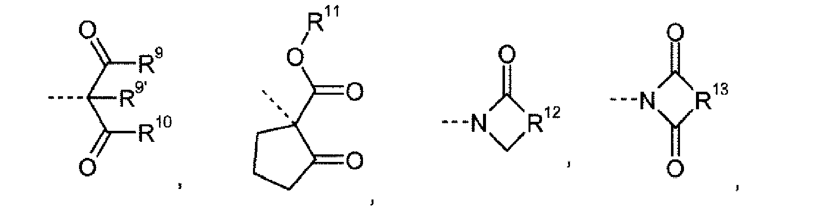 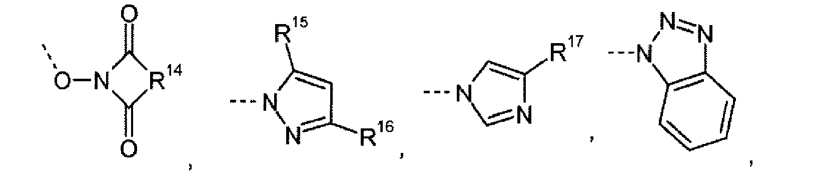 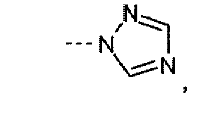 and ---O-R¹⁸;
where
in each case R⁵, R⁶, R⁷ and R⁸, independently of the others, is an alkyl or cycloalkyl or aryl or aralkyl or arylalkyl group,
or R⁵ together with R⁶, or R⁷ together with R⁸, forms a portion of an optionally substituted 4- to 7-membered ring;
in each case R⁹, R^{9'}, and R¹⁰, independently of the others, is an alkyl or aralkyl or aryl or arylalkyl group, or is an alkyloxy or aryloxy or aralkyloxy group;
R¹¹ is an alkyl group,
in each case R¹², R¹³, and R¹⁴, independently of the others, is an alkylene group having from 2 to 5 carbon atoms and, if appropriate, having double bonds or substitution, or is a phenylene group, or is a hydrogenated phenylene group;
in each case R¹⁵, R¹⁶, and R¹⁷, independently of the others, is H, or is an alkyl group; and
R¹⁸ is an aralkyl group or is a mono- or polynuclear substituted or unsubstituted aromatic group which, if appropriate, has aromatic hydroxy groups.

4. The derivatized solid epoxy resin as claimed in any of the preceding claims, **characterized in that** m+q = 1, in particular m = 1 and q = 0.

5. The derivatized solid epoxy resin as claimed in any of the preceding claims, **characterized in that** R⁴ is a moiety selected from the group consisting of butanediol monoglycidyl ether, hexanediol monoglycidyl ether, trimethylolpropane diglycidyl ether, glycerol diglycidyl ether, pentaerythritol triglycidyl ether, glycidol, 3-glycidyloxybenzyl alcohol, hydroxymethylcyclohexene oxide, and 1,3-bis(4-(2-(4-oxiran-2-ylmethoxy)phenyl)propan-2-yl)phenoxy)propan-2-ol) after removal of all of the OH and epoxide groups.

6. The derivatized solid epoxy resin as claimed in any of the preceding claims, **characterized in that** the polyurethane prepolymer **PU1** is produced from at least one diisocyanate or triisocyanate, and also
from a polymer **Q_{PM}** having terminal amino, thiol, or hydroxy groups;
and/or
from a polyphenol **Q_{PP}** which if appropriate has substitution.

7. A composition comprising a derivatized solid epoxy resin as claimed in any of claims 1 to 6.

8. The composition as claimed in claim 7,
**characterized in that** the composition further comprises
- at least one epoxy resin **A** having an average of more than one epoxide group per molecule;
- at least one hardener **B** for epoxy resins, where this hardener is activated via increased temperature.

9. The composition as claimed in any of claims 7 to 8, **characterized in that** the epoxy resin composition comprises at least one blowing agent, in particular in an amount of from 0.1 to 3% by weight, based on the weight of the composition.

10. The composition as claimed in any of claims 7 to 9, **characterized in that** the epoxy resin composition is solid at room temperature and in particular can be processed by hot pressing and/or in particular by injection molding.

11. A process for the production of a derivatized solid epoxy resin of the formula (I) as claimed in any of claims 1 to 6, **characterized in that**, in a first step, a partially capped polyurethane prepolymer of the formula (IV) is formed from the linear or branched polyurethane prepolymer **PU1** terminated by isocyanate groups and the compound R²H and/or of the formula (V) 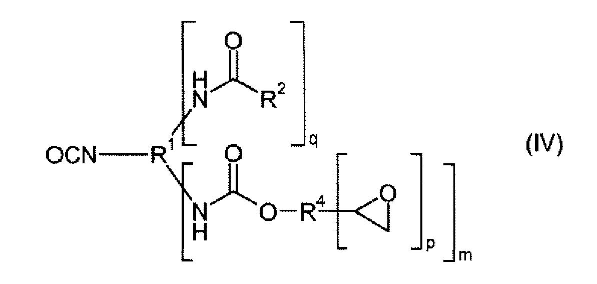 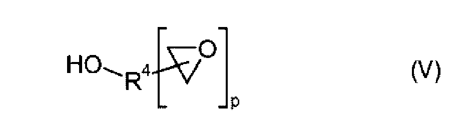 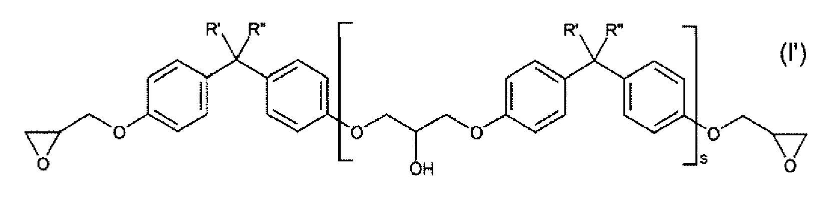 and, in a second step, said intermediate product of the formula (IV) containing NCO groups is reacted with a solid resin of the formula (I') to give the derivatized solid epoxy resin of the formula (I).

12. The use of a derivatized epoxy resin as claimed in any of claims 1 to 6 as means for improving impact resistance, in particular of epoxy resin compositions.

13. The use of a composition as claimed in any of claims 7 to 10 as single-component heat-curing adhesive, in particular as heat-curing bodyshell adhesive in vehicle construction.

14. The use of a composition as claimed in any of claims 7 to 10 as structural foam for the reinforcement of cavities, in particular of metallic structures.

15. An adhesive-bonded item which is obtained via adhesive bonding using a composition as claimed in any of claims 7 to 10, and heating of the adhesive-bonded materials to a temperature of from 100 to 220°C, preferably from 120 to 200°C.

16. A foamed item which is obtained via at least partial filling of a cavity with a composition as claimed in any of claims 7 to 10, and heating of the adhesive-bonded materials to a temperature of from 100 to 220°C, preferably from 120 to 200°C.

## Revendications

1. Résine époxyde solide dérivée de formule (I) 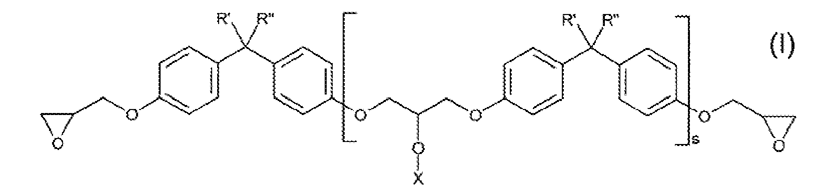 où
R' et R" représentent, indépendamment l'un de l'autre, H ou CH₃ ;
X représente, indépendamment l'un de l'autre, H ou un radical de formule (II) 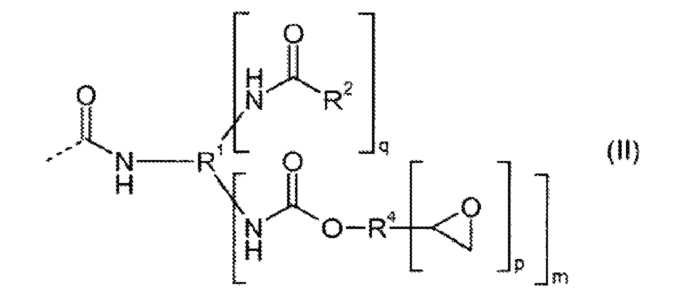
où
R¹ représente un prépolymère de polyuréthane PU1 linéaire ou ramifié terminé par (m + q + 1) groupes isocyanate après l'élimination de tous les groupes isocyanate en position terminale ;
R² représente, indépendamment l'un de l'autre, un groupe de blocage qui se dissocie à une température supérieure à 100°C ;
R⁴ représente un radical d'un époxyde, contenant un groupe hydroxyle primaire ou secondaire, aliphatique, cycloaliphatique, aromatique ou araliphatique après l'élimination des groupes hydroxyde et époxyde ;
p = 1, 2 ou 3 ;
m ≥ 0 et q ≥ 0 à condition que 1 ≤ (m + q) ≤ 8 ;
s présente une valeur de 2 à 12 ;
à condition qu'au moins un X dans la formule (I) représente un radical de formule (II).

2. Résine époxyde solide dérivée selon la revendication 1, **caractérisée en ce que** la formule (I) présente des radicaux X qui représentent H ainsi que des radicaux X qui représentent un radical de formule (II) .

3. Résine époxyde solide dérivée selon l'une quelconque des revendications précédentes, **caractérisée en ce que**
R² représente un radical, qui est choisi dans le groupe constitué par 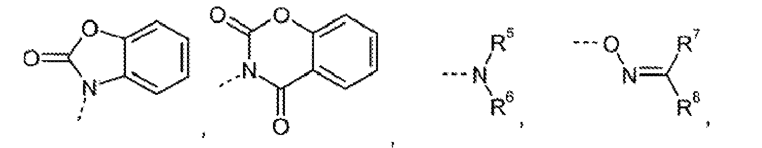 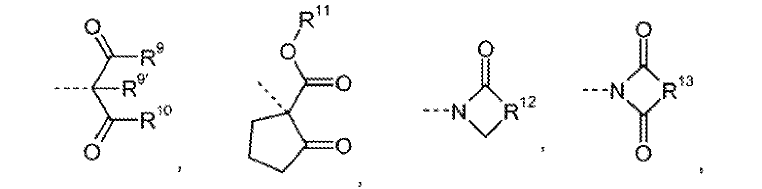 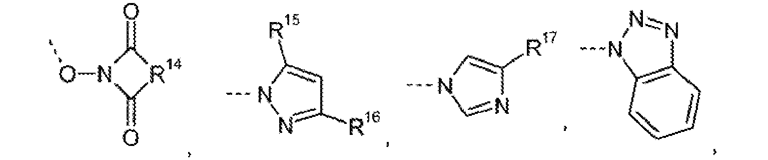 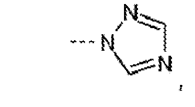
et ---O― R¹⁸ ;
où
R⁵, R⁶, R⁷ et R⁸ représentent chacun, indépendamment l'un de l'autre, un groupe alkyle ou cycloalkyle ou aryle ou aralkyle ou arylalkyle ou R⁵ ensemble avec R⁶ ou R⁷ ensemble avec R⁸ forment une partie d'un cycle de 4 à 7 chaînons, qui est le cas échéant substitué ;
R⁹, R^{9'} et R¹⁰ représentent chacun indépendamment l'un de l'autre un groupe alkyle ou aralkyle ou aryle ou arylalkyle ou un groupe alkyloxy ou aryloxy ou aralkyloxy ;
R¹¹ représente un groupe alkyle,
R¹²,R¹³ et R¹⁴ représentent chacun indépendamment l'un de l'autre un groupe alkylène comprenant 2 à 5 atomes de carbone, présentant le cas échéant des doubles liaisons ou étant le cas échéant substitué, ou un groupe phénylène ou un groupe phénylène hydrogéné ;
R¹⁵, R¹⁶ et R¹⁷ représentent chacun, indépendamment l'un de l'autre, H ou un groupe alkyle ; et
R¹⁸ représente un groupe aralkyle ou un groupe aromatique à un ou plusieurs noyaux, substitué ou non substitué, qui présente le cas échéant des groupes hydroxyle aromatiques.

4. Résine époxyde solide dérivée selon l'une quelconque des revendications précédentes, **caractérisée en ce que** m + q = 1, en particulier m = 1 et q = 0.

5. Résine époxyde solide dérivée selon l'une quelconque des revendications précédentes, **caractérisée en ce que** R⁴ représente un radical qui est choisi dans le groupe constitué par le butanediolmonoglycidyléther, l'hexanediolmonoglycidyléther, le triméthylolpropanediglycidyléther, le glycéroldiglycidyléther, le pentaérythritoltriglycidyléther, le glycidol, l'alcool 3-glycidyloxybenzylique, l'oxyde d'hydroxyméthylcyclohexène et le 1,3-bis(4-(2-(4-(oxiran-2-ylméthoxy)phényl)propan-2-yl)phénoxy)propan-2-ol) après élimination de tous les groupes OH et époxyde.

6. Résine époxyde solide dérivée selon l'une quelconque des revendications précédentes, **caractérisée en ce que** le prépolymère de polyuréthane **PU1** est préparé à partir d'au moins un diisocyanate ou un triisocyanate ainsi que
- à partir d'un polymère **Q_{PM}** présentant des groupes amino, thiol ou hydroxyle en position terminale ; et/ou
- à partir d'un polyphénol **Q_{PP},** le cas échéant substitué.

7. Composition comprenant une résine époxyde solide dérivée selon l'une quelconque des revendications 1 à 6.

8. Composition selon la revendication 7,
**caractérisée en ce que** la composition contient en outre
- au moins une résine époxyde **A** comprenant en moyenne plus d'un groupe époxyde par molécule ;
- au moins un durcisseur **B** pour résines époxydes, qui est activé par une température élevée.

9. Composition selon l'une quelconque des revendications 7 à 8, **caractérisée en ce que** la composition de résine époxyde contient au moins un agent gonflant, en particulier en une quantité de 0,1-3% en poids, par rapport au poids de la composition.

10. Composition selon l'une quelconque des revendications 7 à 9, **caractérisée en ce que** la composition de résine époxyde est solide à température ambiante et peut être transformée en particulier par compression à chaud et/ou en particulier par moulage par injection.

11. Procédé pour la préparation d'une résine solide époxyde dérivée de formule (I) selon l'une quelconque des revendications 1 à 6, **caractérisé en ce que** dans une première étape, un prépolymère de polyuréthane partiellement bloqué de formule (IV) est formé à partir du prépolymère de polyuréthane **PU1** linéaire ou ramifié, terminé par des groupes isocyanate et le composé R²H et/ou de formule (V) 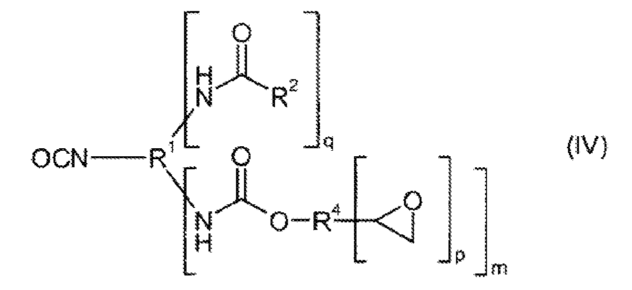 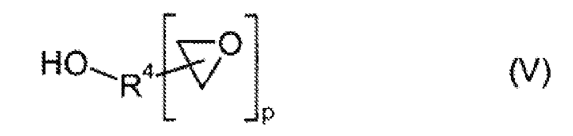 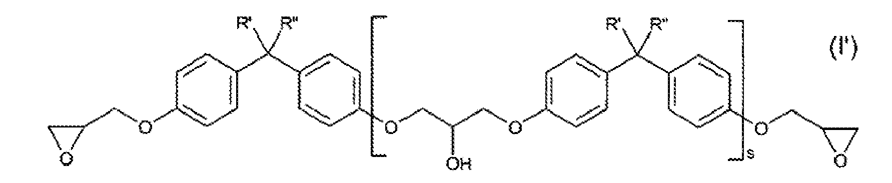 et dans une deuxième étape, ce produit intermédiaire contenant des groupes NCO de formule (IV) est transformé avec une résine solide de formule (I') en résine solide époxyde dérivée de formule (I).

12. Utilisation d'une résine époxyde dérivée selon l'une quelconque des revendications 1 à 6 comme moyen pour améliorer la résilience, en particulier de compositions de résine époxyde.

13. Utilisation d'une composition selon l'une quelconque des revendications 7 à 10 comme adhésif à un composant thermodurcissable, en particulier comme adhésif brut de montage thermodurcissable dans la construction de véhicules.

14. Utilisation d'une composition selon l'une quelconque des revendications 7 à 10 comme mousse de structure pour le renforcement d'espaces creux, en particulier de structures métalliques.

15. Objet collé, qui est obtenu par un collage avec une composition selon l'une quelconque des revendications 7 à 10 et chauffage des matériaux collés à une température de 100-220°C, de préférence de 120-200°C.

16. Objet moussé, qui est obtenu par un remplissage au moins partiel d'un espace creux avec une composition selon l'une quelconque des revendications 7 à 10 et chauffage des matériaux collés à une température de 100-220°C, de préférence de 120-200°C.
